# EUROPÄISCHE PATENTSCHRIFT

(11) **EP 2 677 296 B1**
(45) Veröffentlichungstag und Bekanntmachung des Hinweises auf die Patenterteilung: **20.02.2019**
(21) Anmeldenummer: 13173145.7
(22) Anmeldetag: 21.06.2013
(51) Int. Cl.: G01N 3/04

(54) **Ausrichtvorrichtung einer Prüfvorrichtung**
Alignment device of a testing device
Dispositif d'orientation d'un dispositif de contrôle

(30) Priorität: 22.06.2012 DE 102012012245
(43) Veröffentlichungstag der Anmeldung: 25.12.2013
(73) Patentinhaber: Zwick GmbH & Co. KG, 89079 Ulm (DE)
(72) Erfinder: Ganser, Franz, 88471 Laupheim (DE); Hugger, Manuel, 88499 Riedlingen (DE)
(74) Vertreter: Cremer & Cremer

(56) Entgegenhaltungen:
- CN-U- 201 662 511
- US-A- 5 060 521
- US-A- 5 948 994

## Beschreibung

Die vorliegende Erfindung behandelt eine Ausrichtvorrichtung, die in eine Prüfvorrichtung, insbesondere in eine Prüfvorrichtung für Materialprüfungen durch Zug-, Druck- und/oder Biegeversuche, insbesondere von Metallen, integriert werden kann, und eine solche Prüfvorrichtung selbst. Die Prüfvorrichtungen werden zur Ermittlung von Materialeigenschaften von Prüfspezien bzw. Prüfstücken verwendet, die möglichst ohne Aufbaufehler und möglichst ohne Messfehler unterschiedlichsten Materialversuchen ausgesetzt werden.

### Stand der Technik

Für Materialprüfungen gibt es zahlreiche Prüfmaschinen. Einige werden in den nachfolgend genannten Druckschriften eingehender beschrieben:
Die Druckschrift DE 10 2008 050 465 A1 (Anmelderin: Zwick GmbH & Co. KG; Anmeldetag: 08.10.2008) zeigt eine Vorrichtung zur Durchführung von Bauteil- und Werkstoffprüfungen mit zwei Probenaufnahmen. Die eine Probenaufnahme ist fest an einem Grundrahmen angeordnet, die andere Probenaufnahme an einem verfahrbaren Stellelement. Zur Erfassung von Messdaten weist die Vorrichtung einen Wegaufnehmer und einen Kraftaufnehmer auf, die fluchtend zu einer Mittelachse eines Säulengestells angeordnet sind, womit sich eine günstige Messanordnung ergibt.

Eine Weiterentwicklung einer Prüfvorrichtung ist in der DE 10 2009 036 248 A1 (Anmelderin: Zwick GmbH & Co. KG; Anmeldetag: 05.08.2009) beschrieben. Bei dieser Prüfvorrichtung wird eine verbesserte Messgenauigkeit unter anderem damit erreicht, dass die Wegmesseinheit an einem zweiten Kraftaufnehmer angeordnet ist, womit eine Lagerreibungskraft der Wegmesseinheit als eine Korrekturgröße erfasst werden kann.

Prüfmessungen mit Zugkräften lassen sich insbesondere mit sogenannten Hebelarmprüfmaschinen ausführen wie sie z. B. in der Patentanmeldung DE 10 2009 049 700 A1 (Anmelderin: Messphysik Materials Testing GmbH; Anmeldetag: 17.10.2009) beschrieben sind. Die Zugprüfkraft wird dabei mit einem Hebelarm übersetzt und auf eine Prüfprobe aufgebracht. Die Prüfmaschine umfasst ein biegeelastisches Lagerelement, das nahezu verschleißfrei arbeitet und mit dem mögliche Fehlereinflüsse insbesondere bei Langzeitmessungen vermindert werden können.

Mit einer Testvorrichtung gemäß der DE 600 03 744 T2 (Patentinhaberin: Testing Machines Inc.; Prioritätstag: 08.04.1999) lassen sich verschiedene Messverfahren ausführen. Dazu umfasst die Testvorrichtung einen austauschbaren stationären Arbeitskopf und einen bewegbaren Arbeitskopf. Der bewegbare Arbeitskopf ist an einem von einem Support vorragenden Ende eines bewegbaren Arms angeordnet. Das Testgerät umfasst eine Druckmessdose, die an dem bewegbaren Arm angeordnet ist, und ein Ablenkungsmessgerät zur Messung der Bewegung des Arms.

Die in der Druckschrift DE 11 2006 003 923 T5 (Anmelderin: Shimadzu Corp.; Anmeldetag: 12.06.2006) gezeigte Materialprüfmaschine weist ein Säulenelementepaar und einen längs dazu sich erstreckenden Stützpfosten auf. Der Stützpfosten trägt eine gleitbare Anbringungseinheit, die einen Befestigungsaufsatz bei einer Materialprüfung gleiten lässt, wodurch die Position des Befestigungsaufsatzes in einer Längsrichtung veränderbar ist.

Ein Beispiel für eine Spannvorrichtung einer Werkstoffprüfmaschine ist in der deutschen Gebrauchsmusterschrift DE 20 2007 005 486 U1 (Inhaberin: Demgen Werkzeugbau GmbH; Anmeldetag: 13.04.2007) dargestellt. Die Spannelemente der Vorrichtung haben nur eine geringe Kontaktfläche zum Halten der Probe. Eine unzulässige Belastung der Spannelemente durch Kippmomente beim Spannen soll vermieden werden. Dazu ist eine zusätzliche Führung der Spannelemente gegenüber der Spannvorrichtung vorgesehen. Die Führung kann z. B. mit einem aus der Werkzeugtechnik bekannten säulenartigen Führungselement ausgestaltet sein.

Um nicht die Materialprüfmaschinen, z. B. des Typs Universalprüfmaschine, in allen ihren Einzelheiten diskutieren zu müssen, d. h. zur Förderung der Lesbarkeit der vorliegenden Erfindungsbeschreibung, wird für die Darstellung der üblichen Komponenten und Teile und für die Darstellung der Funktionsweise von Materialprüfmaschinen auf die zuvor genannten Druckschriften Bezug genommen, die hierdurch vollständig in vorliegende Beschreibung inkorporiert sind.

Als Prüfstücke werden üblicherweise sowohl metallische Proben wie auch sonstige Bauteile, deren Materialeigenschaften zu untersuchen sind, verwendet. Diese werden gelegentlich für die Durchführung einer Prüfung besonders präpariert, z. B. durch eine besondere Form gestaltet. Das Spannungs-Dehnungs-Verhalten hängt von der Probe, insbesondere von dem Werkstoff der metallischen Probe ab. Je nach verwendetem Prüfverfahren und der ausgewählten Eingangsgröße oder der ausgewählten Eingangsgrößen für die Steuerung sowie der Art der Messaufnahme ergeben sich bestimmte Fehlerarten, die sogar bis zur nicht gegebenen Reproduzierbarkeit der Messung bei ein und dem gleichen Werkstoff führen können.

Um bei der Vorbereitung der Materialprüfung möglichst keinen bzw. nur geringe Fehler während und nach dem Einspannen des Prüfstücks hervorzurufen, ist es bekannt, wenigstens eine Ausrichtvorrichtung im Versuchsstrang, insbesondere zwischen den beiden Traversen, zwischen der Fahrtraverse und der Standtraverse, in Nachbarschaft zu den Spannvorrichtungen einzubauen. Die Versuchskraft wird über Zugstangen auf das Prüfstück aufgebracht, wobei diese Zugstangen je nach Versuchsdurchführung auch als Druckstangen genutzt werden, folglich anstelle von Zugstange auch von Prüfkraftübertragungsstange gesprochen werden kann. Eine Tätigkeit während der Vorbereitung der Materialprüfung besteht üblicherweise darin, die beiden Prüfkraftübertragungsstangen zueinander auszurichten, sodass davon ausgegangen werden kann, dass zumindest die sich anschauenden Enden der beiden Prüfkraftübertragungsstange fluchtend das Prüfstück einschließen.

In diesem Zusammenhang schlägt die US 4 843 888 A (Patentinhaberin: MTS Systems Corporation; Anmeldetag: 04.04.1988) vor, das Ende der Zugstange mit einer sphärischen Oberfläche auszustatten, die hydraulisch unterdrückt eine Selbstausrichtung der Prüfstückeinspannung erlaubt. Hierzu wird das eine Ende der Zugstange mit der sphärischen Oberfläche durch einzelne Gehäuseteile eingeschlossen in einer inneren Kammer gehalten. Zusätzliche hydraulische Kreise für das Ausrichten sind nur in solchen Materialprüfmaschinen vertretbar, die eine bestimmte Größe nicht unterschreiten. Im Bereich der mit niedrigeren Kräften arbeitenden Universalprüfmaschinen sind häufig möglichst einfache, zuverlässige und per Hand bedienbare Lösungen von den Nutzern der Materialprüfmaschinen gewünscht.

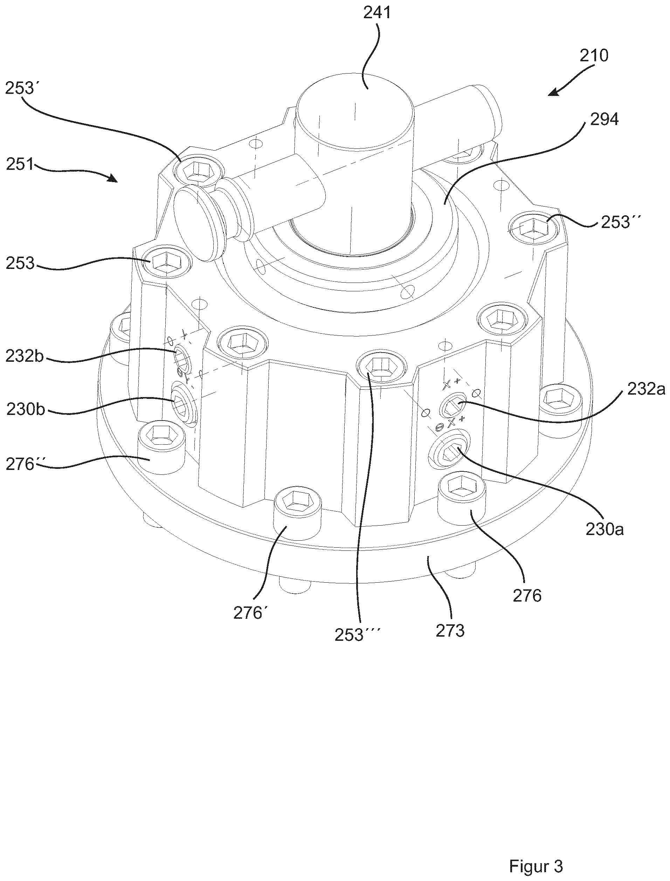

Einen anderen Weg geht die EP 1 126 269 A1 (Anmelderin: Mettler-Toledo GmbH; Anmeldetag: 03.02.2000), in der eine Vorrichtung zur dynamischen mechanischen Analyse von Proben, also zur Bestimmung von Elastizitätsmodulen, beschrieben wird, mit dem Ziel, einen nutzbaren Frequenzbereich zu verbessern. In Figur 3 ist eine Justiervorrichtung gezeigt. Die Justiervorrichtung soll über Schlitten, die mittels Gewindespindeln und zugeordnete Mitnehmer verschiebbar sind, eine Versatzbewegung ausgleichen können und mittels Schwenkrahmen Winkelveränderungen ausgleichen können. Zur Einstellung eines Raumwinkels kommen zwei zylindrische Führungsflächensegmente zum Einsatz.

Die US 4 137 757 A (Patentinhaberin: United States of America; Anmeldetag: 02.02.1978) erkennt, dass sich die Fehlerursachen der Messungen nach dem Einspannen des Prüfstücks auf seitliche und rotierende Bewegungen zurückführen lassen, was auch hinlänglich als Versatz- und Winkelfehler bezeichnet werden kann. Um diese beiden Fehlerursachen möglichst zu reduzieren, werden zwei sequentiell angeordnete Bauglieder vorgeschlagen, von denen das erste Glied eine Kugelpfanne für ein Abrollen und das zweite Glied eine Kugellagerung für einen seitlichen Versatz anbieten. Bei einer sequentiellen Anordnung wird der Prüfstrang länger, die Fahrtraverse muss entsprechend weiter von dem Prüfstück entfernt angeordnet werden.

Zwei weitere Anordnungen zum Ausgleich von Ausrichtfehlern werden in zwei unterschiedlichen Ausführungsbeispielen der US 5 377 549 A (Patentinhaberin: Interlaken Technologies, Inc.; Anmeldetag: 17.12.1992) vorgestellt. Die für eine Materialprüfmaschine bestimmte Variante der beiden Ausführungsbeispiele baut darauf auf, dass die Zugstange durch die Fahrtraverse durchgesteckt an der oberen Seite der Fahrtraverse befestigt eine an ihr mithilfe von Segmentstücken anliegende Ausrichtvorrichtung trägt. Ein solches System zum Ausrichten erfordert eine Zugstange, die zwar eine gewisse Biegung zum Ausgleich der Fehler mitmachen kann, jedoch so überdimensioniert ist, dass sie sowohl die Prüfkraft wie auch das Biegemoment bzw. die Biegekraft zeitgleich aufnehmen kann. Trotz der Überdimensionierung handelt es sich um ein gewissermaßen freischwebendes Ausrichtsystem.

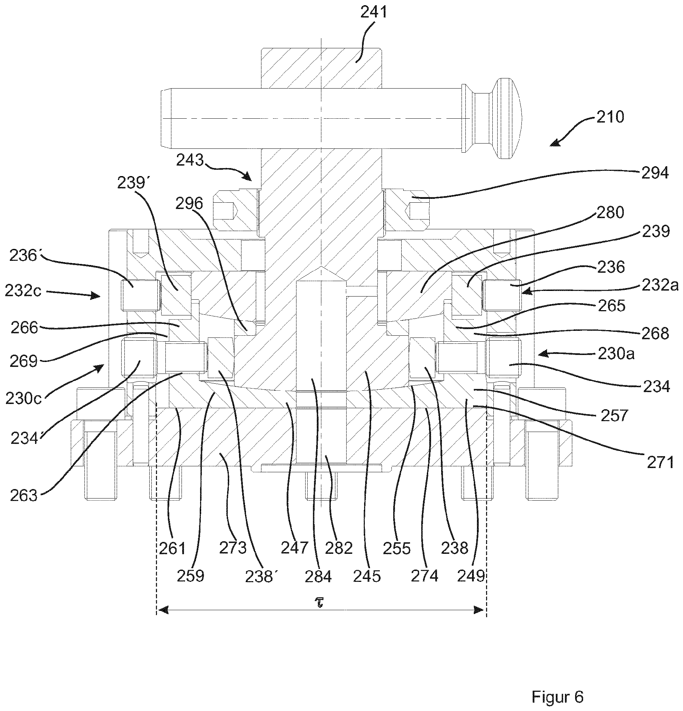

Die multifunktionale Prüfmaschine gemäß US-Patent US 5 948 994 (Erfinder: Jen, Ming-Hwa et. al.; Anmeldetag: 02.04.1998) weist eine obere Traverse und eine untere Traverse auf. Mittels einer in der unteren Traverse gelagerten Stange soll z. B. von einem linearen Hydraulikzylinder oder einem Hydraulikrotator eine Prüfkraft auf einen unteren Probenhalter übertragen werden. Die Prüfkraft kann eine Zugkraft oder auch eine Torsionskraft sein. Ein oberer Probenhalter ist in der oberen Traverse in einem kugelgelenkartigen Gebilde gelagert. Hierbei wird der Halter, der an einer kugelartigen Endausformung angeordnet ist, in einer Halbschale mit einer Zentralbohrung getragen. Die Halbschale wird mit einem nicht tragenden oberen Halbschalenteil geschlossen und diese Halbschalen sind zwischen einer oberen und einer unteren Basisplatte fixiert, wobei die Basisplatten wiederum zwei hydraulische Bremsen jeweils an den Bohrungen und zur Feststellung an den aufrechten Tragesäulen der Prüfmaschine enthalten. In der oberen Halbschale sind drei hydraulische Spanner jeweils mit einer Kugelflächenauflage, die auf der kugelartigen Endausformung aufliegen, angeordnet (siehe z. B. Figur 6). Mittels Information von an der oberen Halbschale angeordneten Sensoren für mechanische Spannungen soll eine hydraulische Festlegung des kugelgelenkartigen Gebildes aufhebbar sein, sodass das System eine Ausgleichsstellung einnehmen kann, um eine ungleichmäßige Kraftverteilung über das kugelgelenkartige Gebilde zu vermeiden.

Ein weiterer Mechanismus, um Kleinstabweichungen von einer idealen linearen Erstreckung abfangen zu können, kann der US 5 060 521 A (Erteilungstag: 29.10.1991; Erfinder: David M. Cole et al.) entnommen werden. An die Enden einer länglichen Probe sollen zwei sphärische Präzisionsgrundelemente angeschraubt werden, die jeweils in einem Kasten laufen können. Eine solche Vorrichtung kann überhaupt nur Versuche mit ganz bestimmten Proben durchführen.

DIE CN 201 662 511 U (Inhaberin: Nanche Qisuyan Engine and Vehicle Technics Inst Co Ltd; Veröffentlichungstag: 01.12.2010) schlägt vor, in eine Spannvorrichtung einer Zugprüfmaschine eine Kupplung einzusetzen, die in einer sphärischen Bohrung geführt ist. Dazu wird ein Probenhalter zylinderisch gebohrt, damit ausreichend Platz für das Einsetzen der Kupplung in den Halter gegeben ist.

Die Erkenntnisse bezüglich der möglichen Fehlerursachen und bezüglich der Ansätze zur Vermeidung von Winkel- und/oder Versatzfehlern aus den zuvor genannten Druckschriften gelten mit ihren Benennungen in vorliegende Erfindungsbeschreibung als vollständig inkorporiert. Die Begrifflichkeiten zur Darstellung der vorliegenden Erfindung sind im Lichte der zuvor genannten Druckschriften und den dort angebotenen Definitionen zusätzlich zu sehen.

### Aufgabenstellung

Zur Verringerung der Messfehler ist eine Materialprüfmaschine, insbesondere eine Zugprüfmaschine, dahingehend weiterzuentwickeln, dass eine hinlänglich auftretende Fehlergruppe bei der Messaufzeichnung möglichst weit ausgeblendet werden kann. Hierbei wäre es besonders vorteilhaft, wenn während der Probenpräparation bzw. beim Einsetzen des Prüfstücks in die Aufnahmevorrichtungen in der Materialprüfmaschine Lage-, Winkel- und/oder Versatzfehler möglichst vor der eigentlichen Versuchsdurchführung beseitigt werden können. Die zur Verringerung dieser Fehler vorgesehene Ausrichtvorrichtung sollte dimensionsmäßig ihrer Aufgabe gerecht werden, idealerweise zugleich eine einfache, zuverlässige und leicht zu akzeptierende Bedienbarkeit aufweisen.

### Erfindungsbeschreibung

Die erfindungsgemäße Aufgabe wird durch eine Ausrichtvorrichtung nach Anspruch 1 gelöst, zusätzlich wird die Aufgabe auch durch eine Ausrichtvorrichtung nach Anspruch 12 gelöst, ein geeignetes Betriebsverfahren lässt sich Anspruch 13 entnehmen. Vorteilhafte Weiterbildungen lassen sich den abhängigen Ansprüchen entnehmen.

Zur Prüfung von Prüfstücken wie Materialproben sind zahlreiche, unterschiedliche Materialprüfmaschinen bekannt. Ein häufig verwendeter Typ ist die so genannte Universalprüfmaschine, die an zwei Piloten geführt eine Standtraverse und eine Fahrtraverse aufweist. Die Piloten werden häufig zusätzlich noch mit Stabilisierungsverstrebungen am unteren und am oberen Ende der Piloten ausgestattet. In dem Freiraum zwischen den beiden Traversen werden bei solchen Materialprüfmaschinen Prüfstücke z. B. eingespannt angeordnet, auf die anschließend eine kontrollierte Prüfkraft oder ein Kraft-Zeit-Profil aufgebracht werden kann. Die Universalprüfmaschinen können für die unterschiedlichsten Tests und Versuche verwendet werden. Gängige Versuche sind Versuche, bei denen mit einer sich verstellenden bzw. sich bewegenden Fahrtraverse ein Zug-, ein Druck- oder ein Biegemomentversuch an dem Prüfstück durchgeführt wird. Hierbei ist es - im Sinne einer möglichst präzisen Versuchsdurchführung - gewünscht, die Prüfkraft, nicht jedoch ungewollte Querkräfte auf das Prüfstück einwirken zu lassen. Die Querkräfte können viele Ursachen haben. Einige Querkräfte gehen auf einen Versatz zwischen den Prüfkraftübertragungsstangen oder eine seitliche Auswinklung aus der Senkrechten durch die Prüfkraftübertragungsstangen zurück. Mit Hilfe einer Ausrichtvorrichtung lässt sich zumindest eine der Querkräfte reduzieren, idealerweise komplett vermeiden.

Die Ausrichtvorrichtung hat Einstellelemente, mit denen Bauteile und Baugruppen in oder an der Ausrichtvorrichtung bewegt werden können bzw. bewegbar sind, um einen vorgefundenen Versatz oder eine vorgefundene Winkelabweichung - idealerweise vor der eigentlichen Versuchsdurchführung - im Vergleich zu einer Senkrechten, gezogen auf die Standtraverse, zu kompensieren, zu minimieren oder zu beseitigen. Als Einstellelemente eignen sich Druckelemente. Die Druckelemente können einen Druck auf ein Bauteil oder eine Baugruppe in der Ausrichtvorrichtung erzeugen. Genauso können die Druckelemente eine Bewegungsfreiheit dem Bauteil oder der Baugruppe der Ausrichtvorrichtung einräumen. Eine besonders vorteilhafte Gestaltung der Druckelemente besteht in einer Kombination aus einer Stellschraube und einem Segmentkissen. Das Segmentkissen liegt großflächiger an dem zu bewegenden Bauteil oder der zu bewegenden Baugruppe an als der Querschnitt des Schafts der Schraube ist. Eine Lageveränderung des Bauteils oder der Baugruppe in der Ausrichtvorrichtung kann besonders leicht eingestellt werden, wenn mehrere Druckelemente vorhanden sind. Idealerweise lässt sich jedes Druckelement unabhängig von den übrigen Druckelementen einstellen. Mit Hilfe der Druckelemente wird zwischen einem ortsfesten Punkt der Ausrichtvorrichtung und der aus der Ausrichtvorrichtung herausschauenden bzw. herausstehenden Prüfkraftübertragungsstange eine Winkelveränderung der Prüfkraftübertragungsstange zu dem ortsfesten Punkt der Ausrichtvorrichtung hervorgerufen. Genauso kann mit Hilfe der Druckelemente zwischen einem ortsfesten Punkt der Ausrichtvorrichtung und der aus der Ausrichtvorrichtung hervorstehenden Prüfkraftübertragungsstange ein bleibender Versatz eingestellt werden. Als ortsfester Bezugspunkt der Ausrichtvorrichtung eignet sich z. B. eine Traversenbefestigungsplatte, insbesondere der gewichtsmäßige oder der geometrische Mittelpunkt.

Die Prüfkraftübertragungsstange reicht in das Innere der Ausrichtvorrichtung hinein. Die Prüfkraftübertragungsstange mündet im Inneren der Ausrichtvorrichtung. Die Prüfkraftübertragungsstange steht nur einseitig aus der Ausrichtvorrichtung heraus. Weil die Prüfkraftübertragungsstange ihre Länge in der Ausrichtvorrichtung beschließt, befindet sich in der Ausrichtvorrichtung ein Ende der Prüfkraftübertragungsstange vollständig, d. h., eine Stirnseite sowie eine endseitige Mantelfläche der Prüfkraftübertragungsstange. Die Prüfkraftübertragungsstange ist vorteilhafterweise schaftartig. Das Ende der Prüfkraftübertragungsstange ist bogenförmig bzw. kalottenartig gestaltet. Eine entsprechende Abrollfläche ist an dem Gegenstück, dem Innengehäuse, der Ausrichtvorrichtung vorhanden. Eine bogenförmige Fläche kann an einer zweiten bogenförmigen Fläche abrollen bzw. daran vorbeigleiten. Die Abrollfläche befindet sich auf einer Innenseite des Innengehäuses. Die Prüfkraftübertragungsstange gelangt in das Innere des Innengehäuses. Die Prüfkraftübertragungsstange findet ihre Lagerfläche auf der Innenseite. Die Innenseite des Innengehäuses ist zumindest in einem Abschnittsbereich konkav gestaltet. Die Prüfkraftübertragungsstange kann sich auf der Lagerfläche in dem Bereich bewegen, der ihr von den Druckelementen für Ausgleichsbewegungen freigegeben wird. Die Druckelemente spannen, insbesondere kraftschlüssig, das Ende der Prüfkraftübertragungsstange ein und fixieren so die Lage des Endes der Prüfkraftübertragungsstange in der Ausrichtvorrichtung. In einer leicht herzustellenden Ausgestaltung ist das Innengehäuse im Bereich seines Bodens zur Mitte hin etwas dünner als an den Rändern des Bodens.

Wenigstens ein weiteres Druckelement, das funktionell bzw. gem. ihrer Formgebung den Druckelementen an der Prüfkraftübertragungsstange entsprechen kann, also gleichartig oder identisch sein kann, ist für eine Bewegung oder eine Fixierung des Innengehäuses in der Ausrichtvorrichtung vorhanden. Das weitere Druckelement beeinflusst die Position bzw. Lage des inneren Gehäuses im Vergleich zu den übrigen Bauteilen der Ausrichtvorrichtung. Die Prüfkraftübertragungsstange stützt sich an dem Innengehäuse ab. Die Prüfkraftübertragungsstange zusammen mit dem Innengehäuse kann mithilfe des weiteren Druckelements lageversetzt werden. Das Innengehäuse erzeugt einen Parallelversatz der Prüfkraftübertragungsstange.

In der Ausrichtvorrichtung kann eine Richtung, die als axiale Richtung bezeichnet werden darf, durch die Orientierung der Prüfkraftübertragungsstange bezeichnet werden. Eine hierzu radial angeordnete Richtung ergibt sich senkrecht stehend auf der Mantelfläche der Prüfkraftübertragungsstange. Die Druckelemente sind senkrecht im Vergleich zu der Mantelfläche der Prüfkraftübertragungsstange in der Ausrichtvorrichtung angeordnet. Die Druckelemente verlaufen kranzförmig um die Prüfkraftübertragungsstange herum. Die Druckelemente liegen in Ebenen, insbesondere in zwei Ebenen. Die Druckelemente der ersten Ebene sind für die Einstellung des Versatzes zuständig. Die Druckelemente der zweiten Ebene sind für die Einstellung des Winkels bzw. für das Hervorrufen einer Winkelveränderung zuständig.

Die Prüfkraftübertragungsstange, an der stirnseitig eine sphärische Oberfläche ausgebildet ist, ist dazu bestimmt, an einer gleichartig geformten Lagerfläche entlangzulaufen. Die Lagerfläche ist vorteilhafterweise Teil des Innengehäuses. Fasst das Innengehäuse das Ende der Prüfkraftübertragungsstange ein, so befindet sich die Lagerfläche für die Prüfkraftübertragungsstange an einer Innenseite des Innengehäuses. Das Innengehäuse umhüllt in dieser Konstellation die Prüfkraftübertragungsstange. Die Lagerfläche kann auch als Innenfläche des Innengehäuses bezeichnet werden. Die beiden Oberflächen, die Oberfläche der Stirnseite der Prüfkraftübertragungsstange und die Oberfläche des Bodens des wannenartigen Innengehäuses auf der Innenseite, sind so aufeinander abgestimmt, dass die Prüfkraftübertragungsstange eine abrollende Schwenkbewegung (im Rahmen des durch die Druckelemente freigegebenen Bereichs) in der Ausrichtvorrichtung durchführen kann. An die Prüfkraftübertragungsstange schließt sich eine Spannvorrichtung an. Das Prüfstück wird häufig zwischen zwei Spannvorrichtungen eingespannt. Eine Spannvorrichtung hält jeweils ein Ende des Prüfstücks. Die Spannvorrichtungen haben Spannbacken. Mithilfe der Spannbacken kann eine flächige Pressung an den Enden des Prüfstücks stattfinden. Die Spannbacken schauen sich mit ihren Oberflächen gegenseitig an. Zwischen den Spannbacken kann also ein Bezugspunkt angeordnet werden, der in der Regel von einem Endbereich des Prüfstücks während einer Materialprobe ausgefüllt ist.

Die Oberflächen für das Abrollen, die Abrollflächen, sind einem Kreisbogen nachgebildet. Sie haben einen Radius. Der Mittelpunkt des Radius der Oberflächen befindet sich an einer Stelle zwischen den beiden Spannbacken, wenn die Ausrichtvorrichtung in einer Materialprüfmaschine mit Spannvorrichtungen angeordnet ist. Besonders vorteilhaft ist es, wenn die exakte Lage des Mittelpunkts im Ausgangsbereich der Spannbacken, also möglichst weit weg von den Oberflächen, liegt. Der Mittelpunkt kann z. B. auf Höhe der Enden der Spannbacken in Richtung auf die Mitte des Prüfstücks liegen.

Die zuvor beschriebene Ausrichtvorrichtung lässt sich vorteilhaft bedienen, bevor die eigentliche Materialprüfung mithilfe der Materialprüfmaschine durchgeführt werden soll. Die Einstellungen an der Ausrichtvorrichtung dienen zur Beseitigung von Spannfehlern und Ungenauigkeiten, die während des Einspannens des Prüfstücks aufgetreten sind. Anschließend wird die Prüfkraft mittels einer Traversenbewegung auf das Prüfstück aufgebracht. Zur Kraftübertragung von der Traverse zu dem Prüfstück dient die Prüfkraftübertragungsstange. Vor der Durchführung der Materialprüfung werden die Druckelemente eingestellt. Diese verlaufen lateral zur Prüfkraftübertragungsstange.

Werden die Druckelemente verstellt, so üben zumindest einige der Druckelemente eine laterale Kraft auf die inneren Bauteile der Ausrichtvorrichtung aus. Die Prüfkraftübertragungsstange kann eine schwenkartige Bewegung, abgestützt auf der Oberfläche der Innenseite des Innengehäuses durchführen. Die Prüfkraftübertragungsstange wird kraft- und formschlüssig an der Oberfläche der Innenseite des Innengehäuses gehalten. Die Rollbewegung, das Abrollen, wird für eine Winkelkompensation eines sich zwischen den Prüfkraftübertragungsstangen der Materialprüfmaschine von 180° abweichenden Winkels genutzt. Bei ordnungsgemäßer Einstellung wird der Winkel zwischen den Prüfkraftübertragungsstangen wieder auf eine fluchtende Ausrichtung eingestellt.

Mit einem weiteren Druckelement, idealerweise durch mehrere in einer Ebene angeordnete Druckelemente, die unterschiedliche Seiten oder Bereiche des Innengehäuses berühren, ist das Innengehäuse zu bewegen. Das Innengehäuse lässt sich entlang einer planen Fläche verschieben. Das Innengehäuse ist verschiebbar innerhalb des Innengehäuses gelagert.

Die Druckelemente des ersten Typs und die Druckelemente des zweiten Typs können unabhängig voneinander eingestellt werden. Die Druckelemente des einen Typs wirken auf den Winkel der Prüfkraftübertragungsstange ein, sie erzeugen eine Winkelveränderung. Die Druckelemente des zweiten Typs wirken auf einen Lageversatz, sie bewirken einen Versatz. Beide Kompensationen können entkoppelt eingestellt werden.

Die mehrfach verschachtelte Anordnung in der Ausrichtvorrichtung sorgt für einen sehr kompakten Aufbau. Die Bauteile wie die Prüfkraftübertragungsstange müssen nur noch so dimensioniert werden, dass sie ihren ureigensten Aufgaben gerecht werden können. Weil viele Querkraftkomponenten nach der Einstellung der Ausrichtvorrichtung bzw. der durchgeführten Kompensation nicht mehr vorhanden sind, ist ein Dimensionsanteil bei der Auslegung der Prüfkraftübertragungsstange nicht mit einzukalkulieren, was wiederum zum grazileren Aufbau der Ausrichtvorrichtung beiträgt. Durch die Nutzung der Stirnseite der Prüfkraftübertragungsvorrichtung, die in der Ausrichtvorrichtung endet, lässt sich eine kurzbauende, nur bis in die Ausrichtvorrichtung reichende Prüfkraftübertragungsvorrichtung verwenden.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

In einer vorteilhaften Weiterbildung umfasst die Ausrichtvorrichtung ein Innengehäuse, das als ein wannenartiges Lagergehäuse geformt ist. Das Innengehäuse wirkt wie eine Pfanne. Die Pfanne dient gleichzeitig als Lager für die Prüfkraftübertragungsstange. Der Boden des wannenartigen Lagergehäuses ist günstiger Weise nicht überall gleich dick. Der Wannenboden hat vorzugsweise mittig eine Vertiefung. Der Wannenboden ist wenigstens bereichsweise der bogenförmigen Stirnseite der Prüfkraftübertragungsstange nachgeführt; er entspricht der Oberfläche der Stirnseite der Prüfkraftübertragungsstange.

Es trägt zur geringeren Bauhöhe der Ausrichtvorrichtung bei, wenn die Ausrichtvorrichtung mehrere Gehäuse hat, die sich gegenseitig einfassen bzw. umschließen. Die Ausrichtvorrichtung hat ein Außengehäuse. Darüber hinaus hat die Ausrichtvorrichtung ein Innengehäuse. Die Gehäuse Außengehäuse und Innengehäuse sind um 180° gegensinnig orientiert. Das eine Gehäuse ist über das andere Gehäuse gestülpt. Das Innengehäuse befindet sich gedreht im Außengehäuse. Das Innengehäuse ist gegengestülpt zum Außengehäuse in diesem angeordnet. Das Innengehäuse wird in einem wannenförmigen Innenraum eingefasst.

Die Ausrichtvorrichtung hat wenigstens eines der zwei Druckelemente von außen zugänglich und einstellbar durch eine Öffnung des Innengehäuses geführt. Vorzugsweise gibt es wenigstens vier Druckelemente, die gleichartig sind. Die vier Druckelemente erfüllen die gleiche Aufgabe. Die Druckelemente können in einer ersten Ebene liegen. Die vier Druckelemente können alle gleich beabstandet um jeweils 90° zueinander gedreht, also in einer festen Winkelteilung zu einem nächsten Druckelement, in einer ersten Ebene angeordnet sein. Die Druckelemente sind so ausgerichtet, dass sie querab zu der Prüfkraftübertragungsstange durch eine Öffnung des Innengehäuses geführt in kraftschlüssiger Verbindung zu der Prüfkraftübertragungsstange stehen. Die Druckelemente drücken seitlich auf einen Bereich der Mantelfläche.

Die Ausrichtvorrichtung hat neben den Druckelementen des ersten Typs in einer sinnvollen Weiterbildung Druckelemente eines zweiten Typs, zumindest ein weiteres Druckelement des zweiten Typs. Vorzugsweise gibt es wenigstens vier Druckelemente des zweiten Typs. Die Druckelemente des zweiten Typs können alle jeweils in einer festen Winkelbeziehung zueinander angeordnet sein. Die Winkelteilung zu einem nächsten Druckelement ist somit stets gleich, z. B. 90°. Die Druckelemente des zweiten Typs liegen in einer zweiten Ebene. Querab zu der Prüfkraftübertragungsstange können die Druckelemente in einer kraftschlüssigen Verbindung mit einer Außenseite des Innengehäuses stehen. Die Druckelemente befinden sich vorzugsweise im Bereich einer parallel zu der Prüfkraftübertragungsstange verlaufenden Außenoberfläche des Innengehäuses, genauer von Schenkeln der Wanne des Innengehäuses. Die Druckelemente des zweiten Typs, zumindest das eine Druckelement des zweiten Typs, drücken gegen eine Außenoberfläche des Innengehäuses mit einem ihrer Enden.

Die Ausrichtvorrichtung lässt sich dadurch weiterbilden, dass das Innengehäuse auf einer Außenseite seines Wannenbodens eine insbesondere plane Schubfläche hat. Das Innengehäuse ist auf der Außenseite möglichst glatt und eben hergestellt. Die Schubfläche kann als Gleit- bzw. Schiebefläche zur Ortsverlagerung dienen. Die Schubfläche bildet sich vorteilhaft an einer Oberfläche einer Traversenbefestigungsplatte aus. Die Traversenbefestigungsplatte und der Wannenboden des Innengehäuses können gegeneinander verschoben werden.

Die Prüfkraftübertragungsstange der Ausrichtvorrichtung kann mit unterschiedlichen Durchmessern entlang ihres Mantels ausgeführt sein. Die Prüfkraftübertragungsstange kann sich z. B. in einem verbreiterten Fuß beschließen. Die Prüfkraftübertragungsstange mündet in den breiteren Fuß. Wenigstens eines der Druckelemente, die zur Winkelveränderung vorhanden sind, wirkt lateral auf den Fuß ein. Ein solches Druckelement bewirkt ein Abkippen der Prüfkraftübertragungsstange durch eine Krafteinwirkung auf den Fuß.

Das Innengehäuse ist in einer Weiterentwicklung allseitig abgeschlossen. Die Ausrichtvorrichtung hat ein Innengehäuse, das eine Abschlussplatte umfasst. Die Abschlussplatte liegt auf dem Innengehäuse. Die Abschlussplatte ist quer zur Prüfkraftübertragungsstange ausgerichtet. Mit anderen Worten kann auch gesagt werden, dass vorzugsweise die Abschlussplatte an einer Seite, die rechtwinklig zu einer axialen Verlängerung der Prüfkraftübertragungsstange das Innengehäuse begrenzt, den Innenbereich des Innengehäuses einschließt.

Es ist besonders geschickt, wenn die Ausrichtvorrichtung die Druckelemente hat, die die Winkelveränderung durch eine relative Positionsveränderung in einem der Gehäuse der Ausrichtvorrichtung bewirken. Die Druckelemente können durch das Innengehäuse in den Innenbereich des Innengehäuses durchreichen.

Die Druckelemente des anderen Typs, z. B. des zweiten Typs, reichen nur durch ein Gehäuse der Ausrichtvorrichtung durch. Die Druckelemente, die eine Veränderung der Lage wie einen Versatz durch eine relative Positionsveränderung in einem der Gehäuse der Ausrichtvorrichtung bewirken, befinden sich in einer Durchbrechung durch das Außengehäuse. Sie reichen aber nicht durch das Innengehäuse durch. Die Druckelemente enden vor dem Innengehäuse.

Die erste Montage wird gefördert, wenn die Ausrichtvorrichtung mit einem Loch ausgestattet ist, das durch die Traversenbefestigungsplatte durchgeht. Das Loch ist eine Ausrichtbolzenöffnung. Die Ausrichtbolzenöffnung befindet sich in der Traversenbefestigungsplatte und geht von einer zur anderen Seite der Traversenbefestigungsplatte durch. Das Innengehäuse ist ebenfalls durchbrochen. Die Ausrichtbolzenöffnung ist als eine Sacklochöffnung in der Prüfkraftübertragungsstange weitergeführt.

Zur Förderung der Beweglichkeit der einzelnen Teile und Flächen ist es empfehlenswert, Gleitmittel oder Gleitpasten auf einzelne Bauteile und Baugruppen der Ausrichtvorrichtung aufzutragen. Zumindest an einer der folgenden Stellen fördert ein Gleitmittel oder eine Gleitpaste die Beweglichkeit zwischen zwei Oberflächen, nämlich
a) zwischen einem Druckelement und der Prüfkraftübertragungsstange,
b) zwischen einem Druckelement und einer Außenseite des Innengehäuses,
c) zwischen der Prüfkraftübertragungsstange, insbesondere der Stirnseite der Prüfkraftübertragungsstange, und einer Innenseite des Innengehäuses, insbesondere dem Wannenboden des Innengehäuses.
Es fördert die Einstellbarkeit weiterhin, wenn auf mehreren der zuvor genannten Oberflächen Gleitmittel oder Gleitpasten, also den Reibkoeffizienten senkende Mittel, aufgetragen sind.

Durch die Verlagerung des Endes der Prüfkraftübertragungsstange, die sowohl in einem Winkelbereich wie auch parallel versetzt zu der Traversenbefestigungsplatte sein kann, werden die Biegemomente in der Prüfkraftübertragungsstange reduziert, wenn nicht sogar eliminiert. Die Prüfkraftübertragungsstange ist biegemomentenbefreit, wenn über die Druckelemente eine optimale Einstellung gefunden wurde. Eine biegemomentenbefreite Prüfkraftübertragungsstangenposition kann durch ein Deplatzieren eines Endes der Prüfkraftübertragungsstange gefunden werden. Es werden mögliche Biegespannungen im Prüfstrang der Materialprüfmaschine vermieden. Durch eine Einstellung an der Ausrichtvorrichtung können Ausrichtungsfehler im Prüfstrang kompensiert werden.

Für eine möglichst stabile Auslegung der gesamten Materialprüfmaschine hat diese Piloten und Stelen. Die Materialprüfmaschine lässt sich in die eigentliche Prüfvorrichtung und in die Messvorrichtung unterteilen. Die Prüfvorrichtung hat einen Rahmen mit zwei Piloten und zwei Querstreben. Die Materialprüfmaschine hat eine Messvorrichtung, die den Wegaufnehmer aufweist. Bei einer solchen Trennung zwischen den Bereichen kann die Prüfvorrichtung in paralleler Ausrichtung zur Messvorrichtung, insbesondere senkrecht stehend, angeordnet sein. Die Materialprüfmaschine lässt sich als Ständermodell realisieren. Schwerkrafteinflüsse wirken nur äußerst bedingt ein.

Einer Materialprüfmaschine lassen sich in der Regel zwei Seiten zuweisen, nämlich eine Basisseite und eine prüfraumbegrenzende Seite. Der jeweiligen Seite kann ein Arm, wie ein Hebelarm, oder eine Traverse, wie eine Quertraverse, zugeordnet sein. Eine Traverse bzw. ein Arm kann als Standtraverse bzw. Standarm oder als Fahrtraverse bzw. Fahrarm ausgebildet sein. Mit einer Fahrtraverse bzw. einem Fahrarm ist eine Abmessung des Prüfraums, wie eine Beabstandung zu einem zweiten Arm bzw. zu einer zweiten Traverse oder zu einer Basis einer Materialprüfmaschine einstellbar. An einem Arm bzw. einer Traverse ist eine erfindungsgemäße Ausrichtvorrichtung montierbar.

Die Ausrichtvorrichtung kann demnach als Nachrüstmodul für eine Materialprüfmaschine ausgebildet sein, die mindestens eine an einer den Freiraum einer Materialprüfmaschine abschließende Befestigungsstelle, wie mindestens ein zugkrafttragendes Gewinde, in einem Außengehäuse aufweist. Durch nachträglichen Einbau einer Ausrichtvorrichtung lässt sich die Messgenauigkeit konventioneller Materialprüfmaschinen nachträglich verbessern. Die verbesserte Messgenauigkeit ist bereits mit dem Einbau der Ausrichtvorrichtung an einer Seite der Materialprüfmaschine möglich. Eine Ausrichtvorrichtung ist ein kompaktes Modul, das auch mit mindestens einer Messvorrichtung, wie einer Kraftmesseinrichtung, kombinierbar ist.

Bereits eine einzelne Ausrichtvorrichtung an einer der Seiten einer Materialprüfmaschine ermöglicht eine Anpassung einer Kraftrichtung. Mit einer Ausrichtvorrichtung an einer Seite einer Materialprüfmaschine ist eine Richtung einer ersten Spannvorrichtung an eine Richtung, wie eine Erstreckungsrichtung, einer Materialprobe, insbesondere im Spannbereich der Materialprobe, anpassbar. Ist zusätzlich an einer zweiten Seite einer Materialprüfmaschine eine zweite erfindungsgemäße Ausrichtvorrichtung eingebaut, so ist auch eine zweite Spannvorrichtung an eine zweite Richtung einer Materialprobe anpassbar, wobei insbesondere die zweite Richtung der Materialprobe von einer ersten Richtung der Materialprobe, z. B. mit einem Winkelmaß, abweichen kann. Die Richtungen können Radialrichtungen sein, die sich jeweils auf einen Punkt entlang einer Erstreckungsrichtung des Prüfraums zwischen den zwei Seiten der Materialprüfmaschine beziehen lassen. Vorzugsweise liegt ein Bezugspunkt der Radialrichtung in einem Spannbereich einer Materialprobe, wie ein Mittelpunkt des Radius. Die Erstreckungsrichtung kann von einer Prüfkrafteinleitungsrichtung oder von einer Prüfkraftausleitungsrichtung und insbesondere von einer Zentralachse einer Materialprüfmaschine, die sich von der ersten Seite der Prüfmaschine zur zweiten Seite der Prüfmaschine erstreckt, abweichen. Die Abweichung kann ein Winkelmaß zu der Zentralachse aufweisen. Der Mittelpunkt des Radius kann bei einer Abweichung der Erstreckungsrichtung zur Zentralachse mit einem Winkelmaß dennoch auf die Zentralachse einstellbar sein. Eine Prüfkraftübertragungsstange, insbesondere eine Zentralachse einer Prüfkraftübertragungsstange, die vorzugsweise auf der gleichen Seite der Materialprüfmaschine wie die Ausrichtvorrichtung angeordnet ist, ist auf eine Erstreckungsrichtung der Materialprobe ausrichtbar.

Mindestens das Innen- und das Außengehäuse sowie die Druckelemente als Komponenten einer Ausrichtvorrichtung befinden sich auf der gleichen Seite der Prüfmaschine. Wenn einzelne Komponenten der einen Ausrichtvorrichtung an einer ersten Traverse angeordnet sind, sind weitere Komponenten der einen Ausrichtvorrichtung nicht an einer zweiten Traverse oder an einem entsprechenden Arm einer Materialprüfmaschine angeordnet. Die Anordnung der Ausrichtvorrichtung an einer der Seiten der Prüfmaschine sorgt für einen platzsparenden Aufbau der Prüfmaschine und eine zeiteffiziente Nachrüstbarkeit.

Die Ausrichtvorrichtung kann als integriertes Teil angesehen werden, das mindestens drei Funktionen erfüllt, zu denen zumindest eine Positionierung eines Spannbackenendes innerhalb einer Ebene, eine Positionierung einer Zentralachse einer ersten Spannvorrichtung mit einem Winkelmaß zu einer Zentralachse der Materialprüfmaschine, eine Ausrichtung einer Kraftübertragungsstange und eine Prüfkraftvermittlung an einer Seite der Materialprüfmaschine gehören, bzw. die als solche realisiert sein können.

Das Außengehäuse fasst vorzugsweise alle Bauteile der Ausrichtvorrichtung zumindest bereichsweise ein. Das Außengehäuse ist einem Endbereich der Prüfkraftübertragungsstange übergestülpt. Allerdings erlaubt das Außengehäuse Verschiebungen und Verkippungen der Prüfkraftübertragungsstange. Anders gesagt, es werden Korrekturen in der Stellung der Prüfkraftübertragungsstange ermöglicht, die insbesondere über Druckelemente begrenzbar sind.

Die Ausrichtvorrichtung kann bei Wartungsarbeiten als Ganzes aus- und wieder eingebaut oder gar ersetzt werden, z. B. mit einer Ausrichtvorrichtung, die bei einer verminderten Probenraumlänge einen radial, bezogen auf die Zentralachse der Materialprüfmaschine, gleichbleibenden Stellbereich aufweist.

Besonders günstig für die Bewegbarkeit der Prüfkraftübertragungsstange ist eine gekrümmte Endfläche der Stange, wobei ein Durchmesser der Prüfkraftübertragungsstange einen Kleinkreis auf einer konstruktiv gedachten Kugel bildet, deren Oberflächenkrümmung der Endfläche der Stange, die auch als Prüfkraftübertragungsstange bezeichnet werden kann, entspricht. Die Kugel ist einem Mittelpunkt zugeordnet, der außerhalb der Ausrichtvorrichtung liegt. Besonders günstig ist ein Kugelmittelpunkt, der mit einem Punkt innerhalb eines anschließbaren Probenhalters übereinstimmt. Vorzugsweise ist der Punkt zugleich ein Mittelpunkt eines Haltebereichs eines Prüfstücks zwischen den Spannbacken. Nach einem anderen Aspekt ist der Mittelpunkt einem Ende der Prüfachse des Prüfstücks zugeordnet. Es kann auch gesagt werden, dass der Abstand von dem Kugelmittelpunkt bis zu der Endfläche der Stange dem Kugelradius entspricht. Der Kugelradius hat etwa die doppelte Länge einer zentralen Erstreckung der Ausrichtvorrichtung von der Traversenbefestigungsplatte an dem Außengehäuse bis zu dem Zentrum einer Querbohrung der ersten Prüfkraftübertragungsstange in einem Endbereich der Prüfkraftübertragungsstange, der außerhalb des Außengehäuse der Ausrichtvorrichtung angeordnet ist. Die Querbohrung kann einen Anschlussbereich für eine Verlängerung der Prüfkraftübertragungsstange oder einen Anschlussbereich für eine Spannvorrichtung bilden. Die Krümmung der Kugeloberfläche folgt dem Kugelradius. Die Endfläche der Stange stellt nur einen vorzugsweise in sich geschlossenen Ausschnitt aus der gesamten Kugeloberfläche dar, wobei der Ausschnitt weniger als die konstruktiv gedachte Gesamtoberfläche der Kugel, insbesondere weniger als eine Kugelhälfte, vorzugsweise nur ein Drittel, überlappt. Die Krümmung der Endfläche der Stange gleicht der Krümmung an der Innenseite des Innengehäuses an dem Wannenboden. Dem Wannenboden lassen sich daher die gleichen gedachten konstruktiven Aspekte einer Kugeloberfläche zuweisen wie der Endfläche der Stange. Der Ausschnitt der Kugeloberfläche, der ein Abbild des Wannenbodens ist, ist vorzugsweise in sich geschlossen und insbesondere größer als der Ausschnitt, welcher der Stange entspricht.

Unter einem Gehäuse kann ein festes Gebilde verstanden werden, das einen inneren Bereich aufweist, der mindestens einen Körper zumindest teilweise umwandend aufnehmen kann. Der umwandete Bereich des Gehäuses ist von einem Außenbereich des Gehäuses unterscheidbar. Das Gehäuse weist zumindest eine Öffnung in einer Raumrichtung auf. Im Gegensatz zu einer mehrseitig offenen Struktur, wie ein Käfig oder eine Röhre, weist ein Gehäuse nur in einer Raumrichtung eine Öffnung auf. Als Öffnungen können auch solche Öffnungen angesehen werden, in denen wiederum wenigstens eine Durchführung steckt oder hineinragt. Werden die Einzelflächen ermittelt, so lassen sich Flächenbeiträge bestimmen oder errechnen. Ein Flächenbeitrag offener Wandbereiche ist kleiner als ein Flächenbeitrag geschlossener Wandbereich zur Gesamtfläche der Gehäusewände. Der innere Bereich des Gehäuses ist zumindest teilweise hohl ausgestaltet. Der innere Bereich des Gehäuses kann andere Elemente, wie ein weiteres Gehäuse, das auch als Innengehäuse bezeichnet werden kann, aufnehmen. Die Konfiguration aus Außengehäuse und Innengehäuse besitzt nach einem Aspekt Ähnlichkeit mit dem verschachtelten Oberteil der bekannten russischen Puppe. Das Gehäuse erfüllt eine Schutzfunktion gegenüber dem Inhalt, wie den Schutz vor reibungserhöhenden Partikeln, die eine Bewegbarkeit der Prüfkraftübertragungsstange erschweren können.

Mithilfe der vorliegenden Erfindung lassen sich ein Versatz- und gleichermaßen ein Winkelfehler im Zuge der Probeaufnahmen beseitigen; Fehler, die vorteilhafterweise probenunabhängig sind.

Die zuvor dargestellten Kombinationen und Ausführungsbeispiele lassen sich auch in zahlreichen weiteren Verbindungen und Kombinationen betrachten.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine Universalprüfmaschine (in vereinfachter Darstellung) mit einer Ausrichtvorrichtung zeigt,
Figur 2 eine Fahrtraverse einer Materialprüfmaschine mit einer Ausrichtvorrichtung zeigt,
Figur 3 eine Ausrichtvorrichtung in 3-D-Ansicht zeigt,
Figur 4 die Ausrichtvorrichtung der Figur 3 in Seitenansicht zeigt,
Figur 5 die Ausrichtvorrichtung der Figur 3 in einer Draufsicht zeigt,
Figur 6 die Ausrichtvorrichtung der Figur 3 in einer Schnittansicht zeigt,
Figur 7 die Ausrichtvorrichtung der Figur 3 in einer Schnittansicht, querverlaufend zu der Schnittansicht nach Figur 6 zeigt und
Figur 8 eine Ausrichtvorrichtung mit einer Traverse in einer alternativen Ausführungsform im Vergleich zu Figur 2 zeigt.

### Figurenbeschreibung

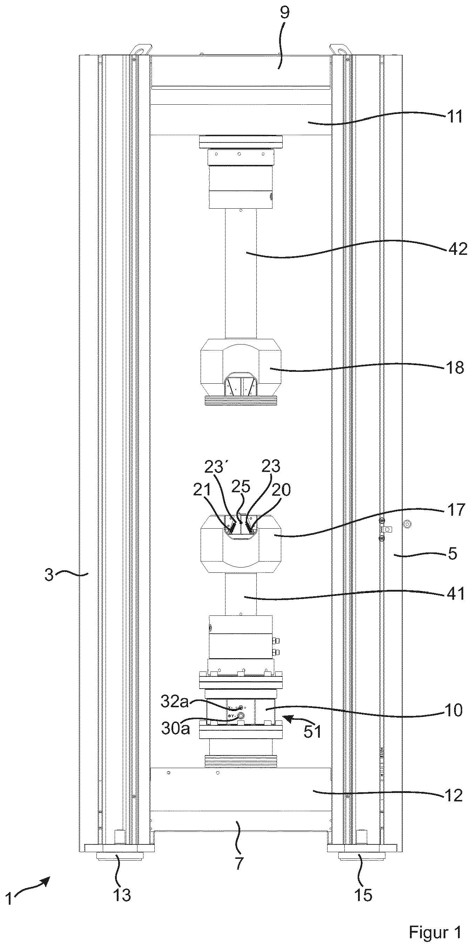

Die in den einzelnen Figuren 1 bis 8 gezeigten Ausgestaltungsmöglichkeiten lassen sich auch untereinander in beliebiger Form verbinden.

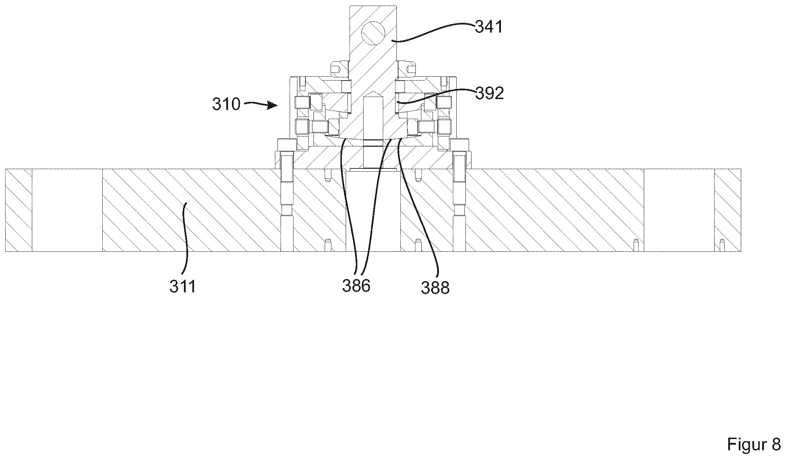

Figur 1 zeigt eine Materialprüfmaschine 1 in einer seitlichen Ansicht. Die als Universalprüfmaschine arbeitende Materialprüfmaschine 1 hat links eine erste Pilote 3 und rechts eine zweite Pilote 5, die über die beiden Querstreben 7, 9 miteinander einen festen Rahmen bilden, an dem die erste Traverse 11 bewegt werden kann, während die zweite Traverse 12 statisch parallel zur ersten Querstrebe 7 an einem Ende des Prüfraums, der für das (nicht dargestellte) Prüfstück eine erste Spannvorrichtung 17 und eine zweite Spannvorrichtung 18 hat. Die Piloten 3, 5 stehen über die Standfüße 13, 15 auf einem Boden. Die Ausrichtvorrichtung 10 sitzt auf der zweiten Traverse 12. Die Spannvorrichtungen 17, 18 haben Spannbacken 20, 21. Abgewandt von der Traverse 12 haben die Spannbacken 20, 21 Enden 23, 23'. Im Bereich der Enden 23, 23' der Spannbacken 20, 21 kann ein (virtueller) Mittelpunkt 25 eines Radius für den sphärischen Verlauf einer sphärischen Oberfläche 388 (vgl. Figur 8) angeordnet werden. Die sphärische Oberfläche 388 ist an einer Kalotte und einem hierzu entsprechenden Ende der Prüfkraftübertragungsstange 41 vorhanden (verbinde Figur 8 mit Figur 1). Mit Hilfe von Druckelementen 30a, 32a kann die Ausrichtung der Prüfkraftübertragungsstange 41 gegenüber der zweiten Prüfkraftübertragungsstange 42 ausgerichtet werden. Die Druckelemente 30a, 32a reichen aus dem Außengehäuse 51 der Ausrichtvorrichtung 10 so heraus, dass mit Hilfe eines gängigen Werkzeugs, wie einem Sechskantschlüssel, das eine Ende der Prüfkraftübertragungsstange 41 bewegt werden kann.

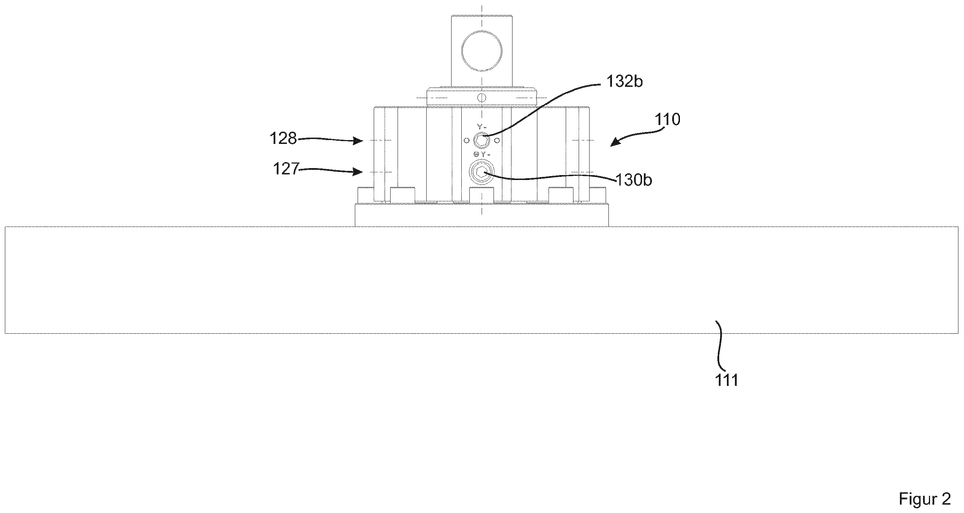

Eine weitere Ausführungsform einer Ausrichtvorrichtung 110 an einer Fahrtraverse 111 ist in Figur 2 gezeigt. Die Ausrichtvorrichtung 110 ist an der Fahrtraverse 111 befestigt. Durch die Ausrichtvorrichtung 110 können Ebenen 127, 128 gelegt werden, in denen Druckelemente wie das Druckelement 130b und das Druckelement 132b vorhanden sind.

Eine weitere Ausrichtvorrichtung 210 ist in den Figuren 3, 4, 5, 6 und 7 dargestellt. Die Ausrichtvorrichtung 210 hat ein Außengehäuse 251, das über Deckelverschlussmittel 253, 253', 253", 253'" mit der Traversenbefestigungsplatte 273 verbunden ist. Die Traversenbefestigungsplatte 273 kann über Befestigungsmittel 276, 276', 276" an einer (nicht dargestellten) Traverse, ähnlich der Traverse nach Figur 1, 2 oder 8, angebracht, z. B. festgeschraubt, werden. Zur Ausrichtung der Prüfkraftübertragungsstange 241 hat das Außengehäuse 251 der Ausrichtvorrichtung 210 Druckelemente 230a, 230b, 232a, 232b. Das Außengehäuse 251 wird auf der von der Traversenbefestigungsplatte 273 abgewandten Seite durch die Verschlussmutter 294 abgeschlossen, in deren Mitte die Prüfkraftübertragungsstange 241 herausragt.

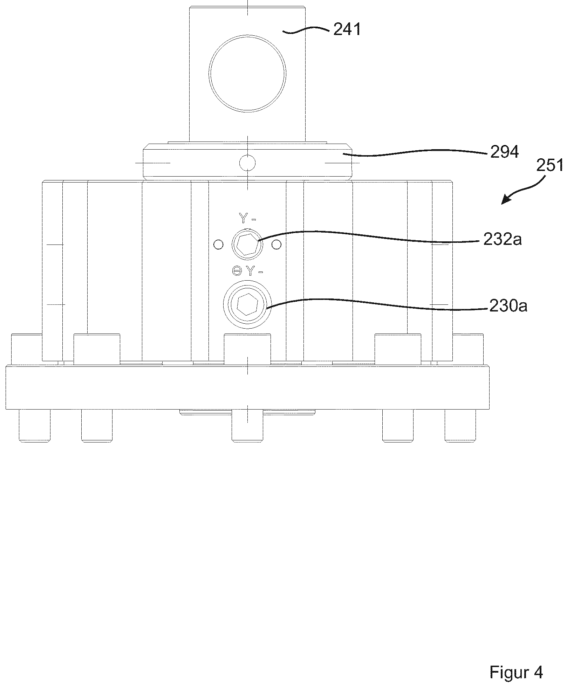

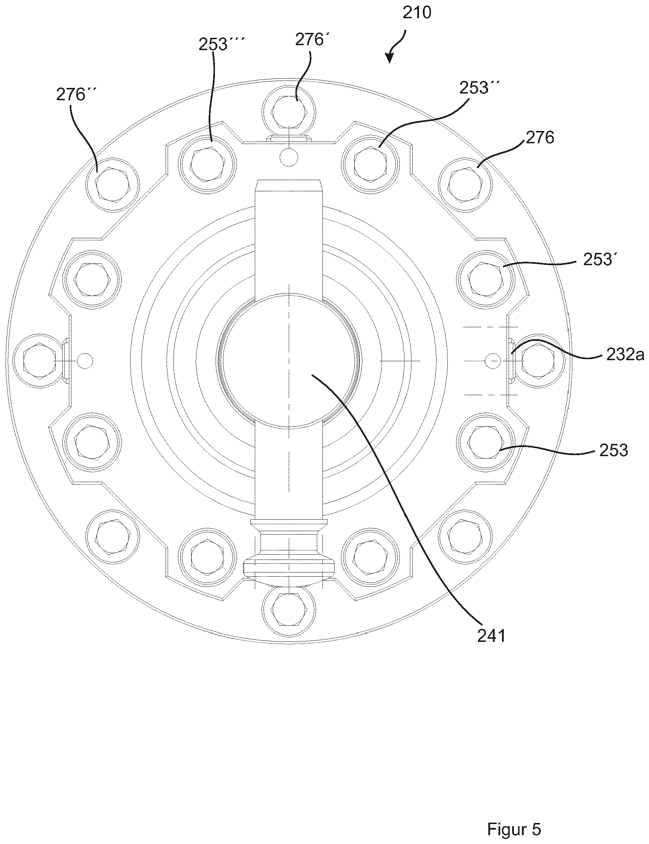

In Draufsicht nach Figur 4 ist das Außengehäuse 251 mit den Druckelementen 230a, 232a in gerader Verlängerung der Prüfkraftübertragungsstange 241, die aus der Verschlussmutter 294 herausschaut, zu sehen. Wird die Ausrichtvorrichtung 210, so wie in Figur 5 dargestellt, von oben betrachtet, so sind die gleichmäßig beabstandet angeordneten Deckelverschlussmittel 253, 253', 253", 253'" umlaufend um die erste Prüfkraftübertragungsstange 241 sowie die hierzu versetzt angeordneten Befestigungsmittel 276, 276', 276" zu sehen, zwischen denen jeweils ein gleichbleibender Winkel beibehalten wird. Genauso mit einem gleichbleibenden Winkel reihum verteilt sind die Druckelemente 230a, 230b, 230c und 232a, 232b, 232c (vgl. Figuren 3, 4 und 6) vorhanden. Wie in Figur 5 zu sehen ist, befindet sich neben jedem zweiten Befestigungsmittel 276, 276', 276" ein Druckelement wie das Druckelement 232a, das über einem Druckelement des ersten Typs (vgl. Figuren 3 und 4) angeordnet ist.

Die Ausrichtvorrichtung 210 wird in Figur 6 in einer Längsschnittzeichnung dargestellt. Als höchstes Bauteil - wenn die Ausrichtvorrichtung 210 auf der Traversenbefestigungsplatte 273 als Boden steht - steht die Prüfkraftübertragungsstange 241 aus der Ausrichtvorrichtung 210 heraus, wobei das Ende 243 der Prüfkraftübertragungsstange 241 mit dem Fuß 245 auf dem Innengehäuse 249 ruht. Die Druckelemente 230a, 230c, 232a, 232c setzen sich jeweils aus einer Stellschraube 234, 234', 236, 236' und dazu gehörigen Segmentkissen 238, 238', 239, 239' zusammen. Die Segmentkissen 238, 238', 239, 239' können direkt bzw. indirekt einen Druck bzw. eine Kraft auf das Ende 243 der Prüfkraftübertragungsstange 241 ausüben. Das Ende 243 der Prüfkraftübertragungsstange 241 liegt mit der Stirnseite 247 an der Innenseite 255 des Innengehäuses 249 an. Die Außenseite 257 des Innengehäuses 249 steht in Berührung mit der Traversenbefestigungsplatte 273. Die Außenseite umfasst eine Mehrzahl von Teilflächen, von denen wenigstens zwei an einer Kante zueinander angeordnet sind und sich unter einem Winkel (ohne Bezugszeichen) zueinander erstrecken. Das Innengehäuse 249 als Lagergehäuse für das Ende 243 der Prüfkraftübertragungsstange 241 ist wannenartig. Der Wannenboden 259 trennt die Innenseite 255 von der Außenseite 257 des Innengehäuses 249. An den Rändern des Wannenbodens 259 ragen die Wannenschenkel 265, 266 parallel zum Ende 243 der Prüfkraftübertragungsstange 241 von der Traversenbefestigungsplatte 273 weg. Das Innengehäuse 249 wird von der Abschlussplatte 280 beschlossen. Die Abschlussplatte 280 hat eine Öffnung für die Prüfkraftübertragungsstange 241. Die Traversenbefestigungsplatte 273 genauso wie der Wannenboden 259 haben an einer zentralen Stelle eine Ausrichtbolzenöffnung 282, die als Sacklochöffnung 284 in das Ende 243 der Prüfkraftübertragungsstange 241 hineinreicht. Die Außenseite 261 des Wannenbodens 259 des Innengehäuses 249 kann gegenüber der Traversenbefestigungsplatte 273 verschoben werden. Hierzu drücken die Segmentkissen 239, 239' gegen das Innengehäuse 249, genauer gegen die Wannenschenkel 265, 266 und die Abschlussplatte 280. Die Stellschrauben 234, 234' des ersten Typs führen jeweils durch eine eigene Öffnung 263 des Innengehäuses 249 bis in den innersten Raum der Ausrichtvorrichtung 210 hindurch. Die Stellschrauben 234, 234' üben ihre Einstellung unmittelbar auf den Fuß 245 aus, während die Stellschrauben 236, 236' an dem Innengehäuse 249 eine Verstellung bewirken. Das Innengehäuse 249 kann entsprechend der Stellung der Stellschrauben 236, 236' an der Schubfläche 271 entlanggleiten. Hierzu ist eine möglichst glatte Oberfläche als Schubfläche 271 gewünscht. Die Schubfläche 271 erlaubt den Schub T des Innengehäuses 249, genauer des Wannenbodens 259 des Innengehäuses 249. Zwischen der Abschlussplatte 280 und der Oberseite des Fußes 245 ist ein Kalottenring 296 eingelegt, der als Kraftübertragungselement dient. Die über die Prüfkraftübertragungsstange 241 ein- oder ausgeleitete Kraft wird über deren Fuß 245 unter Vermittlung des Kalottenrings 296 auf die Abschlussplatte 280 übertragen. Die Abschlussplatte 280 stützt sich an dem Außengehäuse 251, genauer auf der Innenseite des Außengehäuses 251, ab. Das Außengehäuse 251 ist an der Traversenbefestigungsplatte 273 befestigt. Die Abschlussplatte 280 überträgt den Kraftfluss von dem Außengehäuse 251 auf die Prüfkraftübertragungsstange 241 und dann auf das Innengehäuse 249.

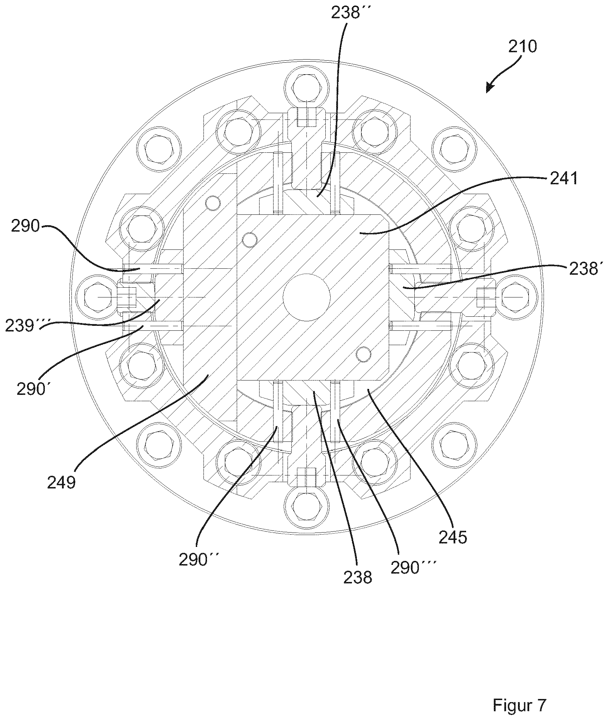

Figur 7 zeigt die Ausrichtvorrichtung 210 in einer Querschnittdarstellung mit unterschiedlichen Schnittebenen. Auch die Prüfkraftübertragungsstange 241 ist geschnitten. Die einzelnen Segmentkissen 238, 238', 238" und 239"', die parallel verlaufend zu der Prüfkraftübertragungsstange 241 an dem Fuß 245 der Prüfkraftübertragungsstange 241 ausgerichtet sind, sind deutlich in Figur 7 zu sehen. Die Segmentkissen 238, 238', 238" sind jeweils zueinander um 90° gedreht. Das Segmentkissen 239" liegt an dem Innengehäuse 249 an. Das Segmentkissen 239" ist auf den Führungsbolzen 290, 290' beweglich gelagert. Das Segmentkissen 238 ist auf den Führungsbolzen 290", 290'" beweglich gelagert. Je zwei Führungsbolzen 290, 290', 290", 290'" tragen ein Segmentkissen 238, 239.

Figur 8 zeigt eine weitere Variante einer Fahrtraverse 311, die an den bisherigen Stand der Technik aufgrund der Perforierung angelehnt ist, mit einer erfindungsgemäßen Ausrichtvorrichtung 310. Selbst auf bisher üblicherweise eingesetzten Fahrtraversen 311 kann eine erfindungsgemäße Ausrichtvorrichtung 310 platziert werden. Damit die Prüfkraftübertragungsstange 341 ungehemmter ihre Schwenk- bzw. Kippbewegung im Innenraum 392 der Ausrichtvorrichtung 310 durchführen kann, sind auf der sphärischen Oberfläche 388 Gleitmittel 386 wie MoS2-Pasten aufgebracht.

Die zuvor dargestellten Ausrichtvorrichtungen 10, 110, 210, 310 lassen sich aufgrund der Druckelemente 30a, 230a, 130b, 230b, 230c, 32a, 232a, 132b, 232b, 232c mit sehr geringen Kräften äußerst exakt einstellen. Versuche haben gezeigt, dass beliebige Winkelgrade in Auflösungen von weniger als 0,005° erreichbar sind. Mithilfe des Gangs an den Druckelementen 30a, 230a, 130b, 230b, 230c, 32a, 232a, 132b, 232b, 232c wird die Auflösung bestimmt. Die vorgestellten Ausrichtvorrichtungen 10, 110, 210, 310, eingebaut in Materialprüfmaschinen wie der Materialprüfmaschine 1, können für eine nahezu biegemomentfreie Ausrichtung der Prüfkraftübertragungsstangen 41, 241, 341, 42 sorgen.

Eine solche Materialprüfmaschine 1 kann für unterschiedlichste Prüfungen, z. B. mit angepassten Dehnungsgeschwindigkeiten, verwendet werden. So lässt sich eine Dehnungsprüfung, eine Materialprüfung anhand von Verfahrgeschwindigkeiten oder eine kraftgeregelte Materialprüfung durchführen.

**Bezugszeichenliste**

| | | |
|---|---|---|
| 1 | Universal-/Materialprüfmaschine | Fig. 1 |
| 3 | erste Pilote | Fig. 1 |
| 5 | zweite Pilote | Fig. 1 |
| 7 | erste Querstrebe | Fig. 1 |
| 9 | zweite Querstrebe | Fig. 1 |
| 10, 110, 210, 310 | Ausrichtvorrichtung | Fig. 1, 2, 3, 5, 6, 7, 8 |
| 11, 111, 311 | erste Traverse, insbesondere Fahrtraverse | Fig. 1, 2, 8 |
| 12 | zweite Traverse, insbesondere Standtraverse | Fig. 1 |
| 13 | erster Standfuß | Fig. 1 |
| 15 | zweiter Standfuß | Fig. 1 |
| 17 | erste Spannvorrichtung | Fig. 1 |
| 18 | zweite Spannvorrichtung | Fig. 1 |
| 20 | erste Spannbacke | Fig. 1 |
| 21 | zweite Spannbacke | Fig. 1 |
| 23, 23' | Ende der Spannbacken | Fig. 1 |
| 25 | Mittelpunkt des Radius | Fig. 1 |
| 127 | erste Ebene | Fig. 2 |
| 128 | zweite Ebene | Fig. 2 |
| 30a, 230a | erstes Druckelement des ersten Typs | Fig. 1, 3, 4, 6 |
| 130b, 230b, 230c | zweites Druckelement des ersten Typs | Fig. 2, 3, 6 |
| 32a, 232a | erstes Druckelement des zweiten Typs | Fig. 1, 3, 4, 5, 6 |
| 132b, 232b, 232c | zweites Druckelement des zweiten Typs | Fig. 2, 3, 6 |
| 234, 234' | erste Stellschraube | Fig. 6 |
| 236, 236' | zweite Stellschraube | Fig. 6 |
| 238, 238', 238" | erstes Segmentkissen | Fig. 6, 7 |
| 239, 239', 239'" | zweites Segmentkissen | Fig. 6, 7 |
| 41, 241, 341 | erste Prüfkraftübertragungsstange | Fig. 1, 3, 4, 5, 6, 7, 8 |
| 42 | zweite Prüfkraftübertragungsstange | Fig. 1 |
| 243 | Ende der Prüfkraftübertragungsstange | Fig. 6 |
| 245 | Fuß | Fig. 6, 7 |
| 247 | Stirnseite | Fig. 6 |
| 249 | Innengehäuse, Lagergehäuse | Fig. 6 |
| 51, 251 | Außengehäuse | Fig. 1, 3, 4 |
| 253, 253', 253", 253'" | Deckelverschlussmittel | Fig. 3, 5 |
| 255 | Innenseite, insbesondere des Innengehäuses | Fig. 6 |
| 257 | Außenseite, insbesondere des Innengehäuses | Fig. 6 |
| 259 | Wannenboden | Fig. 6 |
| 261 | Außenseite des Wannenbodens | Fig. 6 |
| 263 | Öffnung des Innengehäuses | Fig. 6 |
| 265 | erster Wannenschenkel | Fig. 6 |
| 266 | zweiter Wannenschenkel | Fig. 6 |
| 268 | erste Außenoberfläche eines Wannenschenkels | Fig. 6 |
| 269 | zweite Außenoberfläche eines Wannenschenkels | Fig. 6 |
| 271 | Schubfläche | Fig. 6 |
| 273 | Traversenbefestigungsplatte | Fig. 3, 6 |
| 274 | Oberfläche der Traversenbefestigungsplatte | Fig. 6 |
| 276, 276', 276" | Befestigungsmittel, insbesondere der Traversenbefestigungsplatte | Fig. 3, 5 |
| 280 | Abschlussplatte | Fig. 6 |
| 282 | Ausrichtbolzenöffnung | Fig. 6 |
| 284 | Sacklochöffnung | Fig. 6 |
| 386 | Gleitmittel | Fig. 8 |
| 388 | sphärische Oberfläche | Fig. 8 |
| 290, 290', 290", 290'" | Führungsbolzen | Fig. 7 |
| 392 | Innenraum | Fig. 8 |
| 294 | Verschlussmutter | Fig. 3, 4, 6 |
| 296 | Kalottenring | Fig. 6 |
| | | |
| T | Schub | Fig. 6 |

## Patentansprüche

1. Ausrichtvorrichtung (10, 110, 210, 310) einer Materialprüfmaschine (1),
insbesondere einer mit einer Fahrtraverse (11, 111, 311; 12) ausgestatteten Zug-, Druck- und/oder Biegemomentmaterialprüfmaschine (1),
durch die durch Lageveränderung wenigstens zweier radial ausgerichteter Druckelemente (30a, 230a; 130b, 230b, 230c; 32a, 232a; 132b, 232b, 232c),
wie z. B. eines ersten Segmentkissens (238, 238', 238") an einer ersten Stellschraube (234, 234') und
eines zweiten Segmentkissens (239, 239', 239'") an einer zweiten Stellschraube (236, 236'),
unabhängig voneinander auf ein Ende (243) einer axial geführten Prüfkraftübertragungsstange (41, 241, 341) eine Winkelveränderung und ein Versatz bewirkbar sind,
**dadurch gekennzeichnet, dass**
für die Winkelveränderung eine Stirnseite (247) an dem Ende (243) der Prüfkraftübertragungsstange (41, 241, 341) bogenförmig abrollbar gestaltet ist,
die mit einer gebogenen Innenseite eines Innengehäuses (249) in Berührung steht, und das Innengehäuse (249) über wenigstens eines der Druckelemente (30a, 230a; 130b, 230b, 230c; 32a, 232a; 132b, 232b, 232c) gegenüber einem Außengehäuse (51, 251) abgestützt ist.

2. Ausrichtvorrichtung (10, 110, 210, 310) nach Anspruch 1,
**dadurch gekennzeichnet, dass**
das Innengehäuse (249) ein wannenartiges Lagergehäuse (249) ist,
dessen Wannenboden (259) wenigstens bereichsweise der bogenförmigen Stirnseite (247) der Prüfkraftübertragungsstange (41, 241, 341) nachgeführt ist,
wobei vorzugsweise das Außengehäuse (51, 251) gegengestülpt zum Innengehäuse (249) das Innengehäuse (249) in einem wannenförmigen Innenraum (392) einfasst.

3. Ausrichtvorrichtung (10, 110, 210, 310) nach einem der vorhergehenden Ansprüche,
**dadurch gekennzeichnet, dass**
wenigstens eines der zwei Druckelemente (230a, 230b),
vorzugsweise wenigstens vier Druckelemente (230a, 230b, 230c), jeweils alle in einer festen Winkelteilung zu einem nächsten Druckelement in einer ersten Ebene (127) liegend,
querab zu der Prüfkraftübertragungsstange (41, 241, 341) durch eine Öffnung (63) des Innengehäuses (249) geführt in kraftschlüssiger Verbindung zu der Prüfkraftübertragungsstange (41, 241, 341) steht.

4. Ausrichtvorrichtung (10, 110, 210, 310) nach einem der vorhergehenden Ansprüche,
**dadurch gekennzeichnet, dass**
das zweite Druckelement (32a, 232a; 132b; 232a, 232b; 232c),
vorzugsweise wenigstens vier zweite Druckelemente (232a, 232b, 232c), jeweils alle in einer festen Winkelteilung zu einem nächsten Druckelement in einer zweiten Ebene (128) liegend,
querab zu der Prüfkraftübertragungsstange (41, 241, 341) eine kraftschlüssige Verbindung mit einer Außenseite (257) des Innengehäuses (249), vorzugsweise im Bereich einer parallel zu der Prüfkraftübertragungsstange (41, 241, 341) verlaufenden Außenoberfläche (268, 269) von Wannenschenkeln (265, 266), aufweist, insbesondere durch eine endseitige Anlagerung des Druckelements (32a, 232a; 132b; 232a, 232b; 232c) an der Außenoberfläche (268, 269).

5. Ausrichtvorrichtung (10, 110, 210, 310) nach einem der vorhergehenden Ansprüche,
**dadurch gekennzeichnet, dass**
das Innengehäuse (249) auf einer Außenseite (261) seines Wannenbodens (259) eine insbesondere plane Schubfläche (271) hat,
die vorzugsweise an einer Oberfläche (274) einer Traversenbefestigungsplatte (273) verschiebbar anliegt.

6. Ausrichtvorrichtung (10, 110, 210, 310) nach einem der vorhergehenden Ansprüche,
**dadurch gekennzeichnet, dass**
die Prüfkraftübertragungsstange (41, 241, 341) in einem verbreiterten Fuß (245) mündet,
auf den vorzugsweise wenigstens ein Druckelement (30a, 230a; 130b, 230b, 230c; 32a, 232a; 132b, 232b, 232c) zur Winkelveränderung lateral einwirkt.

7. Ausrichtvorrichtung (10, 110, 210, 310) nach einem der vorhergehenden Ansprüche,
**dadurch gekennzeichnet, dass**
das Innengehäuse (249) von einer Abschlussplatte (280),
vorzugsweise an einer Seite, die rechtwinklig zu einer axialen Verlängerung der Prüfkraftübertragungsstange (41, 241, 341) das Innengehäuse (249) begrenzt, eingeschlossen ist.

8. Ausrichtvorrichtung (10, 110, 210, 310) nach einem der vorhergehenden Ansprüche,
**dadurch gekennzeichnet, dass**
die Druckelemente, die die Winkelveränderung durch eine relative Positionsveränderung in einem der Gehäuse der Ausrichtvorrichtung (10, 110, 210, 310) bewirken, durch das Innengehäuse (249) durchreichen.

9. Ausrichtvorrichtung (10, 110, 210, 310) nach einem der vorhergehenden Ansprüche,
**dadurch gekennzeichnet, dass**
die Druckelemente (30a, 230a; 130b, 230b, 230c; 32a, 232a; 132b, 232b, 232c), die eine Veränderung der Lage wie einen Versatz durch eine relative Positionsveränderung in einem der Gehäuse der Ausrichtvorrichtung (10, 110, 210, 310) bewirken, durch das Außengehäuse (51, 251), nicht aber durch das Innengehäuse (249) durchreichen.

10. Ausrichtvorrichtung (10, 110, 210, 310) nach einem der vorhergehenden Ansprüche 5 bis 9,
**dadurch gekennzeichnet, dass**
durch die Traversenbefestigungsplatte (273) eine Ausrichtbolzenöffnung (282) durchgeht, die das Innengehäuse (249) durchbricht und als eine Sacklochöffnung (284) in der Prüfkraftübertragungsstange (41, 241, 341) mündet.

11. Ausrichtvorrichtung (10, 110, 210, 310) nach einem der vorhergehenden Ansprüche,
**dadurch gekennzeichnet, dass**
zumindest an einer der folgenden Stellen ein Gleitmittel (386) oder eine Gleitpaste (386) zwischen zwei Oberflächen angebracht ist:
a) zwischen einem Druckelement (30a, 230a; 130b, 230b, 230c; 32a, 232a; 132b, 232b, 232c) und der Prüfkraftübertragungsstange (41, 241, 341),
b) zwischen einem Druckelement (30a, 230a; 130b, 230b, 230c; 32a, 232a; 132b, 232b, 232c) und einer Außenseite (257) des Innengehäuses (249),
c) zwischen der Prüfkraftübertragungsstange (41, 241, 341), insbesondere der Stirnseite (247) der Prüfkraftübertragungsstange (41, 241, 341), und einer Innenseite (255) des Innengehäuses (249), insbesondere dem Wannenboden (259) des Innengehäuses (249).

12. Ausrichtvorrichtung (10, 110, 210, 310), insbesondere nach einem der vorhergehenden Ansprüche,
mit einer Prüfkraftübertragungsstange (41, 241, 341), an der stirnseitig eine sphärische Oberfläche (388) ausgebildet ist,
die an einer gegengleichen, sphärisch geformten Innenfläche eines Innengehäuses (249) der Ausrichtvorrichtung (10, 110, 210, 310) in abrollbarer Weise anliegt,
wobei an der Prüfkraftübertragungsstange (41, 241, 341) entfernt von der sphärischen Oberfläche (388) eine Spannvorrichtung (17, 18) zum Einspannen einer Prüfprobe mittels Spannbacken (20, 21) angebracht ist,
**dadurch gekennzeichnet, dass**
die Oberfläche einem Radius folgt, dessen Mittelpunkt (25) in einem Bereich zwischen zweien der Spannbacken (20, 21) liegt,
insbesondere dessen Mittelpunkt (25) auf Höhe eines Endes der Spannbacken (20, 21), idealerweise mittig zwischen den Spannbacken (20, 21) liegt.

13. Prüfstückvorbereitung eines Prüfstücks in einer Materialprüfmaschine (1) mit Ausrichtvorrichtung (10, 110, 210, 310),
deren Prüfkraft mittels Traversenbewegung und Prüfkraftübertragungsstange (41, 241, 341; 42) auf das Prüfstück übertragen wird,
**dadurch gekennzeichnet, dass**
vor einer Materialprüfung des Prüfstücks eine laterale Einstellung eines Druckelements (30a, 230a; 130b; 230b, 230c; 32a, 232a; 132b, 232b, 232c), das unmittelbar an einem Ende (243) seitlich die Prüfkraftübertragungsstange (41, 241, 341) kraftschlüssig berührt, eine Abrollbewegung der Prüfkraftübertragungsstange (41, 241, 341) an einer Innenseite (255) eines Innengehäuses (249) zur Winkelkompensation ausübt und vorzugsweise ein weiteres Druckelement (30a, 230a; 130b; 230b, 230c; 32a, 232a; 132b, 232b, 232c) kraftschlüssig eine laterale Einstellung des Innengehäuses (249) innerhalb eines Außengehäuses (51, 251) vorzugsweise planparallel zu einer Innenseite des Außengehäuses (51, 251) eine Versatzkompensation, vorzugsweise in entkoppelter Weise, ermöglicht.

14. Prüfstückvorbereitung nach Anspruch 13
**dadurch gekennzeichnet, dass**
die Prüfkraftübertragungsstange (41, 241, 341, 42) biegemomentenreduziert, insbesondere biegemomentenbefreit an ihrem einen Ende (243) deplatziert wird und hierdurch eine Kompensation in einem Prüfstrang der Materialprüfmaschine (1) herstellbar ist.

## Claims

1. An alignment device (10, 110, 210, 310) of a materials-testing machine (1),
in particular a tensile, pressure, and/or bending-moment materials-testing machine (1) equipped with a moving cross-beam (11, 111, 311; 12),
by means of which, as a result of a change in position of at least two radially aligned pressure elements (30a, 230a; 130b, 230b, 230c; 32a, 232a; 132b, 232b, 232c),
such as e.g. a first segment cushion (238, 238^{I}, 238^{II}) on a first set screw (234, 234^{I}), and
a second segment cushion (239, 239^{I}, 239^{III}) on a second set screw (236, 236^{I}), independently of each other there can be effected on an end (243) of an axially guided testing-force transmission rod (41, 241, 341) a change in angle and an offset,
**characterized in that**
for the change in angle an end face (247) on the end (243) of the testing-force transmission rod (41, 241, 341) is designed such that it can be rolled off in an arcuate manner, which is in contact with a bent inside of an inner housing (249),
and the inner housing (249) is supported relative to an outer housing (51, 251) by means of at least one of the pressure elements (30a, 230a; 130b, 230b, 230c; 32a, 232a; 132b, 232b, 232c).

2. The alignment device (10, 110, 210, 310) according to Claim 1,
**characterized in that**
the inner housing (249) is a trough-like bearing housing (249),
whose trough bottom (259) tracks at least in parts the accurate end face (247) of the testing-force transmission rod (41, 241, 341),
wherein preferably the outer housing (51, 251), by everting over the inner housing (249) in an opposite manner, surrounds the inner housing (249) with a trough-shaped inner space (392).

3. The alignment device (10, 110, 210, 310) according to one of the preceding claims, **characterized in that**
at least one of the two pressure elements (230a, 230b),
preferably at least four pressure elements (230a, 230b, 230c), in each case all lying in a fixed angular division to a nearest pressure element in a first plane (127),
abeam to the testing-force transmission rod (41, 241, 341) guided through an opening (63) of the inner housing (249) is in a force-fitting connection to the testing-force transmission rod (41, 241, 341).

4. The alignment device (10, 110, 210, 310) according to one of the preceding claims,
**characterized in that**
the second pressure element (32a, 232a; 132b; 232a, 232b; 232c),
preferably at least four second pressure elements (232a, 232b, 232c), in each case all lying in a fixed angular division to a nearest pressure element in a second plane (128), abeam to the testing-force transmission rod (41, 241, 341), has a force-fitting connection to an outside (257) of the inner housing (249), preferably in the area of an outside surface (268, 269), running parallel to the testing-force transmission rod (41, 241, 341), of trough legs (265, 266),
in particular by an end-face resting of the pressure element (32a, 232a; 132b; 232a, 232b; 232c) at the outer surface (268, 269).

5. The alignment device (10, 110, 210, 310) according to one of the preceding claims,
**characterized in that**
the inner housing (249) has on an outside (261) of its trough bottom (259) a thrust face (271) that is in particular plane,
that preferably rests slidingly on a surface (274) of a cross-beam fastening plate (273).

6. The alignment device (10, 110, 210, 310) according to one of the preceding claims,
**characterized in that**
the testing-force transmission rod (41, 241, 341) merges into a widened base (245), on which there acts laterally preferably at least one pressure element (30a, 230a; 130b, 230b, 230c; 32a, 232a; 132b, 232b, 232c) for a change in angle.

7. The alignment device (10, 110, 210, 310) according to one of the preceding claims,
**characterized in that**
the inner housing (249) is enclosed by a closing plate (280),
preferably on a side that limits the inner housing (249) at right angles relative to an axial extension of the testing-force transmission rod (41, 241, 341).

8. The alignment device (10, 110, 210, 310) according to one of the preceding claims,
**characterized in that**
the pressure elements that effect the change in angle by a relative change in position in one of the housings of the alignment device (10, 110, 210, 310), reach through the inner housing (249).

9. The alignment device (10, 110, 210, 310) according to one of the preceding claims,
**characterized in that**
the pressure elements (30a, 230a; 130b, 230b, 230c; 32a, 232a; 132b, 232b, 232c) that effect a change in placement and also an offset by a relative change in position in one of the housings of the alignment device (10, 110, 210, 310), reach through the outer housing (51, 251), but not through the inner housing (249).

10. The alignment device (10, 110, 210, 310) according to one of the preceding Claims 5 to 9,
**characterized in that**
there extends through the cross-beam fastening plate (273) an alignment-bolt opening (282) that breaks through the inner housing (249) and merges as a blind hole (284) into the testing-force transmission rod (41, 241, 341).

11. The alignment device (10, 110, 210, 310) according to one of the preceding claims,
**characterized in that**
at at least one of the following points a lubricating means (386) or a lubricating paste (386) is applied between two surfaces:
a) between one pressure element (30a, 230a; 130b, 230b, 230c; 32a, 232a; 132b, 232b, 232c) and the testing-force transmission rod (41, 241, 341),
b) between one pressure element (30a, 230a; 130b, 230b, 230c; 32a, 232a; 132b, 232b, 232c) and an outside (257) of the inner housing (249),
c) between the testing-force transmission rod (41, 241, 341), in particular the end face (247) of the testing-force transmission rod (41, 241, 341), and an inside (255) of the inner housing (249), in particular the trough bottom (259) of the inner housing (249).

12. The alignment device (10, 110, 210, 310), in particular according to one of the preceding claims,
having a testing-force transmission rod (41, 241, 341) on whose end face a spherical surface (388) is formed,
which rests in a manner that can be rolled off, on an oppositely-identical, spherically shaped inside face of an inner housing (249) of the alignment device (10, 110, 210, 310),
wherein on the testing-force transmission rod (41, 241, 341) remote from the spherical surface (388) there is fitted a clamping device (17, 18) for clamping a test sample by means of clamping jaws (20, 21),
**characterized in that**
the surface follows a radius whose center (25) lies in an area between two of the clamping jaws (20, 21),
in particular whose center (25) lies at the level of one end of the clamping jaws (20, 21), ideally centrally between the clamping jaws (20, 21).

13. A test-piece preparation of a test piece in a materials-testing machine (1) having an alignment device (10, 110, 210, 310),
whose testing force is transmitted onto the test piece by means of cross-beam movement and testing-force transmission rod (41, 241, 341; 42),
**characterized in that**
prior to a materials testing of the test piece a lateral setting of a pressure element (30a, 230a; 130b; 230b, 230c; 32a, 232a; 132b, 232b, 232c) that directly at one end (243) contacts in a force-fitting manner laterally the testing-force transmission rod (41, 241, 341), carries out a rolling-off movement of the testing-force transmission rod (41, 241, 341) on an inside (255) of an inner housing (249) for angular compensation, and preferably a further pressure element (30a, 230a; 130b; 230b, 230c; 32a, 232a; 132b, 232b, 232c) makes possible in a force-fitting manner a lateral setting of the inner housing (249) inside an outer housing (51, 251) preferably in a manner plane-parallel to an inside of the outer housing (51, 251) an offset compensation, preferably in a decoupled manner.

14. The test-piece preparation according to Claim 13,
**characterized in that**
the testing-force transmission rod (41, 241, 341, 42) is displaced in a bending-moment-reduced manner, in particular free of any bending moment, at its one end (243) and as a result a compensation in a testing train of the materials-testing machine (1) can be produced.

## Revendications

1. Dispositif d'alignement (10, 110, 210, 310) d'une machine d'essais des matériaux (1), en particulier d'une machine d'essais des matériaux (1) pour le test du couple de traction, de compression et/ou de flexion de matériaux,
équipée d'une traverse mobile (11, 111, 311 ; 12),
machine grâce à laquelle une variation d'angle et un désalignement peuvent être provoqués par une modification de position d'au moins deux éléments de pression (30a, 230a ; 130b, 230b, 230c ; 32a, 232a ; 132b, 232b, 232c) alignés radialement comme, par exemple, d'un premier coussin de segment (238, 238^{I}, 238^{II}) sur une première vis de réglage (234, 234^{I}) et
d'un second coussin de segment (239, 239^{I}, 239^{III}) sur une seconde vis de réglage (236, 236^{I}),
indépendamment l'un de l'autre sur une extrémité (243) d'une tige de transmission de la force de test (41, 241, 341) guidée axialement,
**caractérisé en ce que**,
pour la variation d'angle, une face frontale (247) à l'extrémité (243) de la tige de transmission de la force de test (41, 241, 341) est configurée en pouvant rouler de façon arquée, tige qui est en contact avec une face intérieure incurvée d'un boîtier intérieur (249)
et que le boîtier intérieur (249) s'appuie par rapport à un boîtier extérieur (51, 251) par au moins l'un des éléments de pression (30a, 230a ; 130b, 230b, 230c ; 32a, 232a ; 132b, 232b, 232c).

2. Dispositif d'alignement (10, 110, 210, 310) selon la revendication 1,
**caractérisé en ce**
**que** le boîtier intérieur (249) est un boîtier de palier de type cuve (249) dont le fond de cuve (259) est guidé pour suivre au moins par sections la face frontale incurvée (247) de la tige de transmission de la force de test (41, 241, 341), cependant que de préférence le boîtier extérieur (51, 251), rabattu en sens contraire par rapport au boîtier intérieur (249), enserre le boîtier intérieur (249) dans un espace intérieur en forme de cuve (392).

3. Dispositif d'alignement (10, 110, 210, 310) selon l'une des revendications précédentes,
**caractérisé en ce**
**qu'**au moins l'un des deux éléments de pression (230a, 230b), de préférence au moins quatre éléments de pression (230a, 230b, 230c), respectivement tous situés dans un premier plan (127) dans une division angulaire fixe par rapport à un élément de pression suivant, est en liaison par force avec la tige de transmission de la force de test (41, 241, 341) en étant guidé transversalement à la tige de transmission de la force de test (41, 241, 341) à travers une ouverture (63) du boîtier intérieur (249).

4. Dispositif d'alignement (10, 110, 210, 310) selon l'une des revendications précédentes,
**caractérisé en ce que**
le second élément de pression (32a, 232a ; 132b ; 232a, 232b ; 232c), de préférence au moins quatre seconds éléments de pression (232a, 232b, 232c), respectivement tous situés dans un second plan (128) dans une division angulaire fixe par rapport à un élément de pression suivant, présente une liaison par force avec une face extérieure (257) du boîtier intérieur (249) transversalement par rapport à la tige de transmission de la force de test (41, 241, 341), de préférence dans la zone d'une surface extérieure (268, 269) de montants de cuve (265, 266) qui s'étend parallèlement à la tige de transmission de la force de test (41, 241, 341),
en particulier par un appui de l'élément de pression (32a, 232a ; 132b ; 232a, 232b ; 232c) du côté de l'extrémité sur la surface extérieure (268, 269).

5. Dispositif d'alignement (10, 110, 210, 310) selon l'une des revendications précédentes,
**caractérisé en ce que**
le boîtier intérieur (249) a, sur une face extérieure (261) de son fond de cuve (259), une surface de poussée en particulier plane (271)
qui repose en pouvant coulisser de préférence sur une surface (274) d'une plaque de fixation de la traverse (273).

6. Dispositif d'alignement (10, 110, 210, 310) selon l'une des revendications précédentes,
**caractérisé en ce que**
la tige de transmission de la force de test (41, 241, 341) se termine en un pied élargi (246) sur lequel de préférence au moins un élément de pression (30a, 230a; 130b, 230b, 230c ; 32a, 232a ; 132b ; 232a, 232b ; 232c) agit latéralement pour faire varier l'angle.

7. Dispositif d'alignement (10, 110, 210, 310) selon l'une des revendications précédentes,
**caractérisé en ce que**
le boîtier intérieur (249) est inclus par une plaque de terminaison (280), de préférence sur un côté qui délimite le boîtier intérieur (249) en angle droit avec un prolongement axial de la tige de transmission de la force de test (41, 241, 341).

8. Dispositif d'alignement (10, 110, 210, 310) selon l'une des revendications précédentes,
**caractérisé en ce que**
les éléments de pression qui provoquent la variation d'angle par une variation de position relative dans l'un des boîtiers du dispositif d'alignement (10, 110, 210, 310) traversent le boîtier intérieur (249).

9. Dispositif d'alignement (10, 110, 210, 310) selon l'une des revendications précédentes,
**caractérisé en ce que**
les éléments de pression (30a, 230a; 130b, 230b, 230c ; 32a, 232a ; 132b ; 232a, 232b ; 232c) qui provoquent une variation de la position comme un désalignement par une variation de position relative dans l'un des boîtiers du dispositif d'alignement (10, 110, 210, 310) traversent le boîtier extérieur (51, 251) mais pas le boîtier intérieur (249).

10. Dispositif d'alignement (10, 110, 210, 310) selon l'une des revendications précédentes 5 à 9,
**caractérisé en ce**
**qu'**une ouverture de boulon d'alignement (282) traverse la plaque de fixation de la traverse (273), ouverture qui traverse le boîtier intérieur (249) et qui débouche en tant que trou borgne (284) dans la tige de transmission de la force de test (41, 241, 341).

11. Dispositif d'alignement (10, 110, 210, 310) selon l'une des revendications précédentes,
**caractérisé en ce**
**qu'**un lubrifiant (386) ou une pâte lubrifiante (386) est appliquée entre deux surfaces au moins à l'un des endroits suivants :
a) entre un élément de pression (30a, 230a; 130b, 230b, 230c ; 32a, 232a ; 132b ; 232a, 232b ; 232c) et la tige de transmission de la force de test (41, 241, 341),
b) entre un élément de pression (30a, 230a; 130b, 230b, 230c ; 32a, 232a ; 132b ; 232a, 232b ; 232c) et une face extérieure (257) du boîtier intérieur (249),
c) entre la tige de transmission de la force de test (41, 241, 341), en particulier la face frontale (247) de la tige de transmission de la force de test (41, 241, 341), et une face intérieure (255) du boîtier intérieur (249), en particulier le fond de cuve (259) du boîtier intérieur (249).

12. Dispositif d'alignement (10, 110, 210, 310), en particulier selon l'une des revendications précédentes,
avec une tige de transmission de la force de test (41, 241, 341) sur la face frontale de laquelle une surface sphérique (388) est formée
qui repose de manière à pouvoir rouler contre une face intérieure de forme sphérique diamétralement opposée d'un boîtier intérieur (249) du dispositif d'alignement (10, 110, 210, 310),
cependant qu'un dispositif de serrage (17, 18) pour serrer un échantillon d'essai au moyen de mâchoires de serrage (20, 21) est fixé sur la tige de transmission de la force de test (41, 241, 341) en étant éloigné de la surface sphérique (388),
**caractérisé en ce que**
la surface suit un rayon dont le centre (25) est situé dans une zone entre deux des mâchoires de serrage (20, 21),
en particulier dont le centre (25) est situé à hauteur d'une extrémité des mâchoires de serrage (20, 21), idéalement au milieu entre les mâchoires de serrage (20, 21).

13. Préparation d'un échantillon de test dans une machine d'essais des matériaux (1) avec un dispositif d'alignement (10, 110, 210, 310)
dont la force de test est transmise à l'échantillon de test au moyen du déplacement d'une traverse et au moyen d'une tige de transmission de la force de test (41, 241, 341),
**caractérisée en ce**
**qu'**avant un essai des matériaux de l'échantillon de test un réglage latéral d'un élément de pression (30a, 230a; 130b, 230b, 230c ; 32a, 232a ; 132b ; 232a, 232b ; 232c) qui touche latéralement la tige de transmission de la force de test (41, 241, 341) directement à une extrémité (243) par application de force, exerce un mouvement de roulement de la tige de transmission de la force de test (41, 241, 341) sur une face intérieure (255) d'un boîtier intérieur (249) pour une compensation de l'angle et de préférence un autre élément de pression (30a, 230a; 130b, 230b, 230c ; 32a, 232a ; 132b ; 232a, 232b ; 232c) rend possible par application de force un réglage latéral du boîtier intérieur (249) à l'intérieur d'un boîtier extérieur (51, 251), de préférence une compensation de désalignement parallèlement à une face intérieure du boîtier extérieur (51, 251), de préférence de manière découplée.

14. Préparation d'un échantillon de test selon la revendication 13,
**caractérisé en ce que**
la tige de transmission de la force de test (41, 241, 341) est déplacée avec un moment de flexion réduit,
en particulier en étant exempte de moment de flexion, à l'une de ses extrémités (243) et qu'une compensation peut ainsi être réalisée dans un train d'essai de la machine d'essais des matériaux (1).
